# EUROPEAN PATENT APPLICATION

(11) **EP 4 614 790 A1**
(43) Date of publication of application: **10.09.2025**
(21) Application number: 23914753.1
(22) Date of filing: 12.12.2023
(51) Int. Cl.: H02M 3/28

(54) **CURRENT RESONANT DC/DC CONVERTER**

(30) Priority: 06.01.2023 JP 2023001132; 13.03.2023 JP 2023038762
(71) Applicant: Nichicon Corporation, Kyoto-shi, Kyoto 604-0845 (JP)
(72) Inventor: SASAKI, Mikio, Kyoto-shi, Kyoto 604-0845 (JP); YAMAGUCHI, Masashi, Kyoto-shi, Kyoto 604-0845 (JP)
(74) Representative: Abitz & Partner
(86) International application number: PCT/JP2023/044497
(87) International publication number: WO 2024/147265

(57) **Abstract**

A single-phase current resonant DC/DC converter 1 including a main circuit unit 10 including a transformer circuit Tr, a primary-side switching circuit 11, a primary-side resonant circuit 12, and a secondary-side rectifier circuit 13, and a control unit 20, in which the control unit 20 performs frequency modulation control, output suppression conversion control of reducing output, and output increase conversion control of increasing output, the output suppression conversion control is performed on the basis of a first control amount calculated using a difference between a first frequency and a driving frequency, and the output increase conversion control is performed on the basis of a second control amount calculated using a difference between a second frequency and the driving frequency.

## Description

### TECHNICAL FIELD

The present invention relates to a current resonant DC/DC converter, and the current resonant DC/DC converter includes a single-phase current resonant DC/DC converter and a three-phase current resonant DC/DC converter.

### BACKGROUND ART

In recent years, LLC and CLLC (or referred to as CLLLC) current resonant DC/DC converters have attracted attention. The LLC and CLLC current resonant DC/DC converters are used for various applications because they have advantages of being small in size, high in efficiency, fewer components and allow for low cost. For example, it is used as a power source of a quick charger for charging a battery of an electric vehicle and a power source of a bidirectional vehicle to home (V2H) system for charging and discharging the battery of an electric vehicle.

In the LLC and CLLC current resonant DC/DC converters, output is controlled by performing frequency modulation control, but there is a problem that output voltage range is narrow. In the frequency modulation control, when reducing the output voltage, it is necessary to increase a driving frequency . But there are problems such as the loss increases when the driving frequency is increased, and the output cannot be reduced to zero even if the driving frequency is increased. Furthermore, in the frequency modulation control, when the input voltage is low, the voltage cannot be sufficiently stepped-up, and there is a problem that a desired output voltage cannot be obtained.

For example, the CHAdeMO standard, which is the charging standard for electric vehicles, is required to support a wide range of output voltage from 150 [V] to 450 [V]. For this reason, in the conventional current resonant DC/DC converter used in quick charger, in addition to the frequency modulation control, intermittent control (burst control) is also performed when reducing the output. But there is a problem that an output current ripple increases when the intermittent control is performed.

Patent Document 1 proposes a method for performing control by switching a control mode between the frequency modulation control and phase shift control in order to support a wide range of output voltage. This method involves increasing driving frequency to maximum by the frequency modulation control to reduce the output, and then the phase shift control is started to further reducing the output. However, in this method, it is necessary to separately perform the frequency modulation control and the phase shift control. Since the control amount of the frequency modulation control and the control amount of the phase shift control are not related to each other, there are problems such as the control and the configuration of software becomes complicated.

In Patent Document 2, a method is proposed in which control is performed by switching between the frequency modulation control and the phase shift control as described in Patent Document 1, but the change in output due to switching is suppressed by performing the phase shift control while performing the frequency modulation control in a predetermined switching operation range. However, this method also involves switching between two control modes, there is difficulty in simultaneously controlling the two control amounts in addition to the problems similar to the method described in Patent Document 1.

In addition, V2H system requires a bidirectional operation. Since a desired output voltage cannot be obtained if the battery voltage is low at the time of the discharge operation, a bidirectional step-up/downconverter and a bidirectional CLLC current resonant converter are combined to perform a step-up/down operation. Thus, there are problems such as a decrease in efficiency, an increase in the number of components, and an increase in the size of power supply.

Patent Document 3 proposes a current resonant DC/DC converter having a configuration in which a boost (step-up) circuit is included in an LLC resonant circuit. However, in this configuration, it is necessary to separately perform the frequency modulation control and boost control. Since the two control modes are switched, there is a problem that the configuration of software becomes complicated, and in addition, there is a problem that the number of components increases by the amount of switching elements for the boost.

Patent Document 4 proposes a method in which, a drive circuit in a current resonant circuit has a full-bridge configuration. The drive circuit is controlled so that the turn-off of a switching element of an upper arm of a first leg and the turn-off of a switching element of a lower arm of a second leg have a phase difference, and for increasing the phase shift amount as the driving frequency increases. In this method, when there is a large input/output voltage ratio and the driving frequency is lower than a resonance frequency, the phase shift amount is fixed to a minimum value and a step-up operation is performed. When the input/output voltage ratio decreases, the phase shift amount is increased as the driving frequency increases while the driving frequency is between the resonance frequency and the maximum driving frequency. When the driving frequency reaches the maximum driving frequency, the driving frequency is fixed and only the phase shift amount is increased to perform a step-down operation.

However, in the method described in Patent Document 4, since the phase shift control is performed under the condition that the driving frequency is equal to or higher than the resonance frequency, a large resonant current is cut off and soft switching may not be established, and thus there is a problem that the efficiency is reduced. In addition, when the input/output voltage ratio is large, the driving frequency is set to be lower than the resonance frequency to perform the step-up operation, but there is also a problem that the step-up operation may not be sufficiently performed depending on the input/output condition, and thus it is not possible to cope with a wide range of output voltage.

Patent Document 5 proposes a method of controlling an LLC current resonant DC/DC converter. This control method includes the steps of calculating a theoretical frequency corresponding to the frequency modulation control on the basis of an input signal; performing the frequency modulation control by fixing a phase shift amount while the theoretical frequency is in a first frequency range; and performing the phase shift control by fixing a driving frequency to a maximum frequency while the theoretical frequency is in a second frequency range. However, in the LLC current resonant DC/DC converter, the optimum value of the driving frequency varies by conditions such as an input/output voltage and a load of a power supply destination. Therefore, it is practically difficult to calculate the theoretical frequency.

Furthermore, in recent years, a CLLC/LLC three-phase current resonant DC/DC converter has been employed for a DC/DC converter and a bidirectional DC/DC converter in order to achieve miniaturization, high efficiency, low cost, large capacity, and the like.

The three-phase current resonant DC/DC converter is a three-phase drive of a CLLC/LLC single-phase current resonant DC/DC converter having a half bridge configuration or full bridge configuration, and is characterized in that allows for high power capability and low ripple output due to an autonomous balancing function. However, the three-phase current resonant DC/DC converter has a problem that the output voltage range is narrow, similarly to the CLLC/LLC single-phase current resonant DC/DC converter having a half-bridge configuration or full-bridge configuration. In particular, in a case of the CLLC method that performs bidirectional power transmission, it is possible to reduce the power without an additional circuit by devising control such as burst (intermittent) control or phase shift control in the step-down operation, but there are many problems such as an additional circuit is required in the step-up operation and the like.

Patent Document 6 discloses a CLLC three-phase current resonant DC/DC converter in which step-up circuit is connected in series. However, when the step-up circuit is connected in series to the three-phase current resonant DC/DC converter, the plurality of switching elements and the step-up coils constituting the step-up circuit lead to increased cost due to an increase in the number of components, an increase in size of the entire device (or the entire system), and a decrease in power conversion efficiency due to switching loss of the switching elements and an iron loss and a copper loss of the step-up coils.

Patent Document 7 discloses a voltage current DC/DC converter having a single-phase full bridge configuration in which an LC resonant circuit is provided in series with a secondary-side winding of a transformer, and performs boosting operation as a step-up operation by short-circuiting a secondary-side switching circuit. In the single-phase voltage-current DC/DC converter described in Patent Document 7, the period (on-duty of the short circuit switch) during which the secondary-side switching circuit is short-circuited is controlled by the winding ratio and the output voltage of the transformer, and thereby the step-up operation can be performed without providing the step-up circuit. However, the above-described control (boost control) cannot be directly applied to the current resonant DC/DC converter. Since the current resonant DC/DC converter performs the frequency modulation control for controlling the driving frequency of the switching elements (the output changes depending on the driving frequency), for example, it is necessary to consider how to control the driving frequency at the time of boost control. In addition, in a case of the three-phase current resonant DC/DC converter, there are two resonant current paths on the drive side at the same time, and the resonant current does not continue to flow even if the switching element of the primary-side switching circuit is turned on, making the control to be more complicated. Therefore, when performing boost control in the three-phase current resonant DC/DC converter, for example, there are a problems such as at which timing and through which path for short-circuiting the secondary-side switching circuit.

Patent Document 8 discloses a DC/DC converter having a single-phase full bridge configuration in which performs boosting operation by short-circuiting a primary-side switching circuit when power transmission is performed from a secondary side to a primary side. Since the DC/DC converter described in Patent Document 8 has a voltage circuit configuration on the secondary side, the above-described control (boost control) cannot be directly applied to the current resonant DC/DC converter, similar to the voltage current DC/DC converter described in Patent Document 7. In particular, in a case of the three-phase current resonant DC/DC converter, as described above, there are problems such as at which timing and through which path for performing the boosting operation.

Patent Document 9 discloses a converter that short-circuits a secondary-side switching circuit by detecting the criticality of a current flowing through a secondary winding of a transformer, and then turning on a switching element of a primary-side switching circuit (half bridge configuration), and turning on a switching element of a secondary-side switching circuit (bridge rectifier circuit) for a predetermined time in accordance with the on timing of the switching element of a primary-side switching circuit. In the converter described in Patent Document 9, the secondary-side switching circuit performs the step-up operation during the predetermined time by the above-described control, so that the output voltage can be increased. However, when the above-described control is applied to the current resonant DC/DC converter, the switching cycle of the primary-side switching circuit is shortened, and thereby the driving frequency of the primary-side switching circuit increases. As a result, in the current resonant DC/DC converter, both the increase in the output voltage due to step-up operation and the decrease in the output voltage due to increased driving frequency simultaneously occur. Thus, even if the time for short-circuiting the secondary-side switching circuit is the same, when the driving frequency is relatively low and close to the resonance frequency, the increase in the output voltage is dominant and a large output can be obtained. However, when the driving frequency is relatively high and away from the resonance frequency, the decrease in the output voltage is dominant and leads to a small output. Therefore, in a case where the control described in Patent Document 9 is applied to the current resonant DC/DC converter, there is a problem that the control characteristic changes depending on the driving frequency. Further, in a case where it is applied to the three-phase current resonant DC/DC converter, in addition to the above-described problem, there are problems such as at what timing and through which path for short-circuiting the secondary-side switching circuit.

### PRIOR ART DOCUMENTS

### PATENT DOCUMENTS

Patent Document 1: Japanese Patent No. 6898511
Patent Document 2: WO 2022/153723 A1
Patent Document 3: US 2015/0162840 A
Patent Document 4: JP-A-2017-99182
Patent Document 5: Chinese Patent No. 114785150
Patent Document 6: Chinese Patent No. 114157159
Patent Document 7: JP-A-2005-224012
Patent Document 8: JP-A-2014-180167
Patent Document 9: JP-A-2021-112003

### SUMMARY OF THE INVENTION

### PROBLEMS TO BE SOLVED BY THE INVENTION

The present invention has been made in view of the circumstances, and an object thereof is to provide a current resonant DC/DC converter capable of coping with a wide range of output voltage without adding an element and a circuit and without complicating a software configuration for control.

### MEANS FOR SOLVING THE PROBLEMS

In order to achieve the object, a single-phase current resonant DC/DC converter according to the present invention includes:
a main circuit unit including
a transformer circuit,
a primary-side switching circuit provided on a primary side of the transformer circuit, including at least one primary-side leg including a set of primary-side switching elements connected in series,
a primary-side resonant circuit provided between the primary-side leg and the transformer circuit, including a resonant coil and a resonant capacitor, and
a secondary-side rectifier circuit provided on a secondary side of the transformer circuit, including at least one secondary-side leg including a set of rectifying means connected in series, which the rectifying means including a diode or a secondary-side switching element; and
a control unit that controls the primary-side switching element and/or the secondary-side switching element, wherein
the control unit executes:
   frequency modulation control of controlling an output of the main circuit unit with the driving frequency as a control amount when the driving frequency of the primary-side switching element is between a first frequency and a second frequency lower than the first frequency, and
   at least one of the following controls:
      output suppression conversion control of reducing the output by using a first control amount calculated using a difference between the driving frequency and the first frequency as the control amount when the driving frequency is higher than the first frequency; or
output increase conversion control of increasing the output by using a second control amount calculated using a difference between the second frequency and the driving frequency as the control amount when the driving frequency is lower than the second frequency.

In this configuration, the frequency modulation control, the output suppression conversion control based on the first control amount, and the output increase conversion control based on the second control amount are all frequency control in which the driving frequency is included in the control amount. That is, in this configuration, it is not necessary to perform control by switching to another control mode, and there is no need to take measures against a change in output due to the switching of control mode, and control can be performed only on the basis of frequency control. Therefore, with this configuration, it is possible to cope with a wide range of output voltage without adding an element and a circuit and without complicating a software configuration for control.

The single-phase current resonant DC/DC converter can have a configuration in which
the output suppression conversion control includes
frequency PWM conversion control of controlling a pulse width of a PWM signal for the primary-side switching element or the secondary-side switching element on the basis of the first control amount, or
frequency intermittent conversion control of controlling a standby period in which an on/off operation of the primary-side switching element is not performed on the basis of the first control amount, or
frequency phase shift conversion control of controlling a phase shift amount between the primary-side legs on the basis of the first control amount.

In the single-phase current resonant DC/DC converter, for example,
the output increase conversion control is frequency boost conversion control of short-circuiting the secondary-side rectifier circuit by controlling an ON period of the secondary-side switching element of the secondary-side rectifier circuit during a period in which a resonant current flows in the primary-side resonant circuit on the basis of the second control amount.

The single-phase current resonant DC/DC converter can have a configuration in which
the first control amount is calculated by calculating the difference between the driving frequency and the first frequency and a predetermined first gain, and
the control unit during the output suppression conversion control varies a value of the first frequency and/or the first gain according to an input/output condition related to an input voltage, an input/output voltage ratio, or output power of the main circuit unit.

Further, the single-phase current resonant DC/DC converter can have a configuration in which
the second control amount is calculated by calculating the difference between the second frequency and the driving frequency and a predetermined second gain, and
the control unit during the output increase conversion control varies a value of the second frequency and/or the second gain according to an input/output condition related to an input voltage, an input/output voltage ratio, or output power of the main circuit unit.

The single-phase current resonant DC/DC converter can have a configuration in which
the control unit during the output suppression conversion control performs control so that the first control amount does not exceed a predetermined first maximum control amount, and
the control unit during the output increase conversion control performs control so that the second control amount does not exceed a predetermined second maximum control amount.

The single-phase current resonant DC/DC converter can have a configuration in which
the main circuit unit includes a resonant coil and a resonant capacitor, and
the primary-side switching circuit includes two of the primary-side legs consisting of a first leg and a second leg connected in parallel, and
the secondary-side rectifier circuit includes two of the secondary-side legs consisting of a third leg and a fourth leg connected in parallel, which the rectifying means of each of the legs includes the secondary-side switching element, or only the rectifying means constituting upper and lower arms of the third leg or the fourth leg includes the secondary-side switching element, or only the rectifying means constituting a lower arm of the third leg and an upper arm or a lower arm of the fourth leg includes the secondary-side switching element, and a reverse connected diode is connected in parallel to a current path of the secondary-side switching element.

The single-phase current resonant DC/DC converter can have a configuration in which
the control unit performs frequency phase shift conversion control as the output suppression conversion control, and
the control unit during the frequency phase shift conversion control determines the driving frequency by comparing an output value of the output with a target value, and sets a value obtained by multiplying the difference between the driving frequency and the first frequency by a predetermined first gain as a phase shift amount to provide a phase difference corresponding to the phase shift amount between the first leg and the second leg.

The single-phase current resonant DC/DC converter can have a configuration in which
the control unit performs frequency boost conversion control as the output increase conversion control, and
the control unit during the frequency boost conversion control determines the driving frequency by comparing an output value of the output with a target value, and sets a value obtained by multiplying the difference between the second frequency and the driving frequency by a predetermined second gain as a boost amount to provide the secondary-side switching element with an on-period corresponding to the boost amount.

The single-phase current resonant DC/DC converter can have a configuration in which
the main circuit unit includes a resonant coil and a resonant capacitor, and
the primary-side switching circuit includes two of the primary-side legs consisting of a first leg and a second leg connected in parallel, and
the secondary-side rectifier circuit includes two of the secondary-side legs consisting of a third leg and a fourth leg connected in parallel, and the rectifying means of each of the legs includes the secondary-side switching element, and
the control unit performs frequency PWM conversion control as the output suppression conversion control, and
the control unit during the frequency PWM conversion control determines the driving frequency by comparing an output value of the output with a target value, calculates a phase difference that is the first control amount using the difference between the driving frequency and the first frequency, and shifts an on-timing of the secondary-side switching element by the phase difference relative to an on-timing of the primary-side switching element.

A three-phase current resonant DC/DC converter according to the present invention includes:
a transformer unit including a first transformer circuit, a second transformer circuit, and a third transformer circuit, each of the transformer circuits including a primary-side coil and a secondary-side coil;
a primary-side switching circuit including a first leg, a second leg, and a third leg connected in parallel, each of the legs includes an upper arm and a lower arm connected in series, and each of the arms includes a switching element, a reverse connected diode, and a partial resonant capacitor connected in parallel;
a primary-side resonant circuit including a first resonant circuit connected to the first leg and the primary-side coil of the first transformer circuit, a second resonant circuit connected to the second leg and the primary-side coil of the second transformer circuit, and a third resonant circuit connected to the third leg and the primary-side coil of the third transformer circuit, each of the resonant circuits including a resonant coil and a resonant capacitor;
a secondary-side switching circuit including a fourth leg, a fifth leg, and a sixth leg connected in parallel, each of the legs includes a switching element, a reverse connected diode, and a partial resonant capacitor connected in parallel; and
a control unit that controls the primary-side switching circuit and the secondary-side switching circuit; and
the three-phase current resonant DC/DC converter performing forward power transmission from the primary-side switching circuit to the secondary-side switching circuit, wherein
the control unit
performs, when a driving frequency of the primary-side switching circuit is higher than a first frequency, frequency modulation control of controlling the driving frequency according to an output of the secondary-side switching circuit, and
performs, when the driving frequency is equal to or lower than the first frequency, boost control to generate a boost period in which the secondary-side switching circuit is brought into a short-circuit state, and
the control unit during the boost control
turns on one of the switching elements of the secondary-side switching circuit to generate the boost period within a period in which a resonant current flows through the first resonant circuit and the second resonant circuit, within a period in which a resonant current flows through the second resonant circuit and the third resonant circuit, and within a period in which a resonant current flows through the third resonant circuit and the first resonant circuit.

In this configuration, by performing the boost control when the driving frequency is equal to or less than the predetermined first frequency, a large resonant current flows in the resonant circuit during the boost period to store large energy in the resonant coil in a short period, and the energy can be released as the load current so that a high output voltage can be obtained even when the input voltage is low. That is, with this configuration, it is possible to cope with a wide range of output voltages without adding an element and a circuit for performing the step-up operation.

The three-phase current resonant DC/DC converter can have a configuration in which
the transformer unit has:
the secondary-side coil of the first transformer circuit connected to the fourth leg,
the secondary-side coil of the second transformer circuit connected to the fifth leg, and
the secondary-side coil of the third transformer circuit connected to the sixth leg, and
the secondary-side switching circuit
includes the fourth leg, the fifth leg, and the sixth leg, each of the legs includes an upper arm and a lower arm connected in series, and each of the arms includes the switching element, the reverse connected diode, and the partial resonant capacitor connected in parallel, and
the control unit during the boost control
turns on the switching element of the lower arm of the fourth leg or the switching element of the upper arm of the fifth leg to generate the boost period within the period in which the resonant current flows through the first resonant circuit and the second resonant circuit,
turns on the switching element of the lower arm of the fifth leg or the switching element of the upper arm of the sixth leg to generate the boost period within the period in which the resonant current flows through the second resonant circuit and the third resonant circuit, and
turns on the switching element of the lower arm of the sixth leg or the switching element of the upper arm of the fourth leg to generate the boost period within the period in which the resonant current flows through the third resonant circuit and the first resonant circuit.

The three-phase current resonant DC/DC converter can have a configuration in which
the control unit during the boost control
calculates a boost amount by multiplying a difference between the driving frequency and the first frequency by a frequency boost conversion gain, and determines a length of the boost period on the basis of the boost amount.

The three-phase current resonant DC/DC converter can have a configuration in which
the control unit during of the boost control
calculates a boost amount by multiplying a difference between an output value of the secondary-side switching circuit and a predetermined target value by an output boost conversion gain, and determines a length of the boost period on the basis of the boost amount.

The three-phase current resonant DC/DC converter can have a configuration in which
the control unit during the boost control
starts the boost period at a timing when a period in which the resonant current flows starts.

The three-phase current resonant DC/DC converter can have a configuration in which
the secondary-side switching circuit
includes the fourth leg, the fifth leg, and the sixth leg, each of the legs includes an upper arm and a lower arm connected in series, and each of the arms includes the switching element, the reverse connected diode, and the partial resonant capacitor connected in parallel, and
the control unit
performs synchronous rectification control of turning on any one of the switching elements of each of the arms of the secondary-side switching circuit to generate a synchronous rectification period, and
the control unit during the boost control and the synchronous rectification control
starts the boost period at a timing when the period in which the resonant current flows starts, and starts the synchronous rectification period at a timing when the boost period ends

The three-phase current resonant DC/DC converter can have a configuration in which
the control unit
varies a maximum value of the boost period by a input/output voltage ratio so that the boost period becomes longer when the input/output voltage ratio between the input voltage of the primary-side switching circuit and the output voltage of the secondary-side switching circuit is high.

The three-phase current resonant DC/DC converter can have a configuration in which
the secondary-side switching circuit
includes the fourth leg, the fifth leg, and the sixth leg, and each of the legs includes an upper arm and a lower arm connected in series,
one of the lower arm of the fourth leg or the upper arm of the fifth leg is constituted by the switching element, the reverse connected diode, and the partial resonant capacitor connected in parallel, and another of the lower arm of the fourth leg or the upper arm of the fifth leg is constituted only by a diode,
one of the lower arm of the fifth leg or the upper arm of the sixth leg is constituted by the switching element, the reverse connected diode, and the partial resonant capacitor connected in parallel, and another of the lower arm of the fifth leg or the upper arm of the sixth leg is constituted only by a diode, and
one of the lower arm of the sixth leg or the upper arm of the fourth leg is constituted by the switching element, the reverse connected diode, and the partial resonant capacitor connected in parallel, and another of the lower arm of the sixth leg or the upper arm of the fourth leg is constituted only by a diode, and
the control unit during the boost control
turns on the switching element of the lower arm of the fourth leg or the switching element of the upper arm of the fifth leg to generate the boost period within the period in which the resonant current flows through the first resonant circuit and the second resonant circuit,
turns on the switching element of the lower arm of the fifth leg or the switching element of the upper arm of the sixth leg to generate the boost period within the period in which the resonant current flows through the second resonant circuit and the third resonant circuit, and
turns on the switching element of the lower arm of the sixth leg or the switching element of the upper arm of the fourth leg to generate the boost period within the period in which the resonant current flows through the third resonant circuit and the first resonant circuit.

The three-phase current resonant DC/DC converter can have a configuration further including:
a secondary-side resonant circuit includes a fourth resonant circuit connected to the fourth leg and the secondary-side coil of the first transformer circuit, a fifth resonant circuit connected to the fifth leg and the secondary-side coil of the second transformer circuit, and a sixth resonant circuit connected to the sixth leg and the secondary-side coil of the third transformer circuit, each of the resonant circuits includes a resonant coil and a resonant capacitor, wherein
the secondary-side switching circuit
includes the fourth leg, the fifth leg, and the sixth leg, and each of the arms includes the switching element, the reverse connected diode, and the partial resonant capacitor connected in parallel, and
the control unit, when performing a backward power transmission from the secondary-side switching circuit to the primary-side switching circuit,
performs frequency modulation control of controlling the driving frequency according to an output of the primary-side switching circuit when a driving frequency of the secondary-side switching circuit is higher than a second frequency, and
performs boost control to generate a boost period in which the primary-side switching circuit is brought into a short-circuit state when the driving frequency is equal to or lower than the second frequency, and
the control unit during the boost control
turns on one of the switching elements of the primary-side switching circuit to generate the boost period within the period in which the resonant current flows through the fourth resonant circuit and the fifth resonant circuit, within the period in which the resonant current flows through the fifth resonant circuit and the sixth resonant circuit, and within the period in which the resonant current flows through the sixth resonant circuit and the fourth resonant circuit.

### EFFECT OF THE INVENTION

According to the present invention, it is possible to provide a single-phase and three-phase current resonant DC/DC converter capable of coping with a wide range of output voltages without adding an element and a circuit and without complicating a software configuration for control.

### BRIEF DESCRIPTION OF THE DRAWINGS

Fig. 1 is a diagram illustrating a single-phase current resonant DC/DC converter according to a first embodiment.
Fig. 2 is a diagram illustrating a relationship between a driving frequency and a phase shift amount and a boost amount during a discharge operation in the single-phase current resonant DC/DC converter according to the first embodiment.
Fig. 3 is a control flowchart of the single-phase current resonant DC/DC converter according to the first embodiment.
Fig. 4 is a control block diagram of the single-phase current resonant DC/DC converter according to the first embodiment.
Fig. 5 is a drive waveform diagram of a switching element at a time of frequency modulation control of the single-phase current resonant DC/DC converter according to the first embodiment.
Fig. 6 is a diagram illustrating a current flow of the single-phase current resonant DC/DC converter according to the first embodiment, in which (A) is a diagram illustrating a flow during a period of a mode 1 of Fig. 5, and (B) is a diagram illustrating a flow during a period of a mode 3 of Fig. 5.
Fig. 7 is a drive waveform diagram of the switching element during frequency phase shift conversion control of the single-phase current resonant DC/DC converter according to the first embodiment.
Fig. 8 is a diagram illustrating a current flow of the single-phase current resonant DC/DC converter according to the first embodiment, in which (A) is a diagram illustrating a flow during a period of a mode 2 of Fig. 7, and (B) is a diagram illustrating a flow during a period of a mode 4 of Fig. 7.
Fig. 9 is a drive waveform diagram of a switching element during frequency boost conversion control of the single-phase current resonant DC/DC converter according to the first embodiment.
Fig. 10 is a diagram illustrating a current flow of the single-phase current resonant DC/DC converter according to the first embodiment, in which (A) is a diagram illustrating a flow during a period of a mode 1B of Fig. 9, and (B) is a diagram illustrating a flow during a period of a mode 3B of Fig. 9.
Fig. 11 is a diagram illustrating a single-phase current resonant DC/DC converter according to a first modification.
Fig. 12 is a diagram illustrating a single-phase current resonant DC/DC converter according to a second modification.
Fig. 13 is a drive waveform diagram of a switching element during frequency boost conversion control of the single-phase current resonant DC/DC converter according to the second modification.
Fig. 14 is a diagram illustrating a current flow in a single-phase current resonant DC/DC converter according to a second modification, in which (A) is a diagram illustrating a flow during a period of a mode 1B of Fig. 13, and (B) is a diagram illustrating a flow during a period of a mode 3B of Fig. 13.
Fig. 15 is a diagram illustrating a single-phase current resonant DC/DC converter according to a third modification.
Fig. 16 is a drive waveform diagram of a switching element during frequency PWM conversion control of the single-phase current resonant DC/DC converter according to the third modification.
Fig. 17 is a diagram illustrating a current flow of the single-phase current resonant DC/DC converter according to the third modification, in which (A) is a diagram illustrating a flow during a period of a mode 1' of Fig. 16, and (B) is a diagram illustrating a flow during a period of a mode 2' of Fig. 16.
Fig. 18 is a diagram illustrating a current flow in the single-phase current resonant DC/DC converter according to the third modification, in which (A) is a diagram illustrating a flow during a period of a mode 3' of Fig. 16, and (B) is a diagram illustrating a flow during a period of a mode 4' of Fig. 16.
Fig. 19 is an example of a circuit diagram of a three-phase current resonant DC/DC converter according to a second embodiment.
Fig. 20 is a diagram illustrating a relationship between a driving frequency and a boost amount of the three-phase current resonant DC/DC converter according to the second embodiment.
Fig. 21 is a diagram illustrating a frequency boost conversion control block of the three-phase current resonant DC/DC converter according to the second embodiment.
Fig. 22 is an example of a control flow diagram of the three-phase current resonant DC/DC converter according to the second embodiment.
Fig. 23 is an example of a diagram illustrating control timing at a time of diode rectification control of the three-phase current resonant DC/DC converter according to the second embodiment.
Fig. 24 is a current path diagram in the three-phase current resonant DC/DC converter of the second embodiment, in which (A) is a diagram of a period of a mode 1 of Fig. 23, and (B) is a diagram of a period of a mode 2 of Fig. 23.
Fig. 25 is a current path diagram in the three-phase current resonant DC/DC converter of the second embodiment, in which (A) is a diagram of a period of a mode 3 of Fig. 23, and (B) is a diagram of a period of a mode 4 of Fig. 23.
Fig. 26 is a current path diagram in the three-phase current resonant DC/DC converter of the second embodiment, in which (A) is a diagram of a period of a mode 5 of Fig. 23, and (B) is a diagram of a period of a mode 6 of Fig. 23.
Fig. 27 is an example of a diagram illustrating control timing at a time of diode rectification control and boost control of the three-phase current resonant DC/DC converter according to the second embodiment.
Fig. 28 is a current path diagram in the three-phase current resonant DC/DC converter of the second embodiment, in which (A) is a diagram of a period of a mode 1-1 of Fig. 27, and (B) is a diagram of a period of a mode 1 of Fig. 27.
Fig. 29 is a current path diagram in the three-phase current resonant DC/DC converter of the second embodiment, in which (A) is a diagram of a period of a mode 3-1 of Fig. 27, and (B) is a diagram of a period of a mode 3 of Fig. 27.
Fig. 30 is a current path diagram in the three-phase current resonant DC/DC converter of the second embodiment, in which (A) is a diagram of a period of a mode 5-1 of Fig. 27, and (B) is a diagram of a period of a mode 5 of Fig. 27.
Fig. 31 is an example of a diagram illustrating control timing at a time of synchronous rectification control of the three-phase current resonant DC/DC converter according to the second embodiment.
Fig. 32 is a current path diagram in the three-phase current resonant DC/DC converter of the second embodiment, in which (A) is a diagram of a period of a mode 1 of Fig. 31, and (B) is a diagram of a period of a mode 2 of Fig. 31.
Fig. 33 is a current path diagram in the three-phase current resonant DC/DC converter of the second embodiment, in which (A) is a diagram of a period of a mode 3 of Fig. 31, and (B) is a diagram of a period of a mode 4 of Fig. 31.
Fig. 34 is a current path diagram in the three-phase current resonant DC/DC converter of the second embodiment, in which (A) is a diagram of a period of a mode 5 of Fig. 31, and (B) is a diagram of a period of a mode 6 of Fig. 31.
Fig. 35 is an example of a diagram illustrating control timings at a time of synchronous rectification control and boost control of the three-phase current resonant DC/DC converter according to the second embodiment.
Fig. 36 is a current path diagram in the three-phase current resonant DC/DC converter of the second embodiment, in which (A) is a diagram of a period of a mode 1-1 of Fig. 35, and (B) is a diagram of a period of a mode 1 of Fig. 35.
Fig. 37 is a current path diagram in the three-phase current resonant DC/DC converter of the second embodiment, in which (A) is a diagram of a period of a mode 3-1 of Fig. 35, and (B) is a diagram of a period of a mode 3 of Fig. 35.
Fig. 38 is a current path diagram in the three-phase current resonant DC/DC converter of the second embodiment, in which (A) is a diagram of a period of a mode 5-1 of Fig. 35, and (B) is a diagram of a period of a mode 5 of Fig. 35.
Fig. 39 is an example of a circuit diagram of a three-phase current resonant DC/DC converter according to a first modification.
Fig. 40 is a diagram illustrating an output voltage boost conversion control block of the three-phase current resonant DC/DC converter according to the first modification.
Fig. 41 is an example of a control flow diagram of the three-phase current resonant DC/DC converter according to the first modification.
Fig. 42 is an example of a circuit diagram of a three-phase current resonant DC/DC converter according to a second modification.

### MODE FOR CARRYING OUT THE INVENTION

Hereinafter, embodiments of a single-phase and three-phase current resonant DC/DC converter according to the present invention will be described with reference to the accompanying drawings.

### [Embodiment of single-phase current resonant DC/DC converter (first embodiment)]

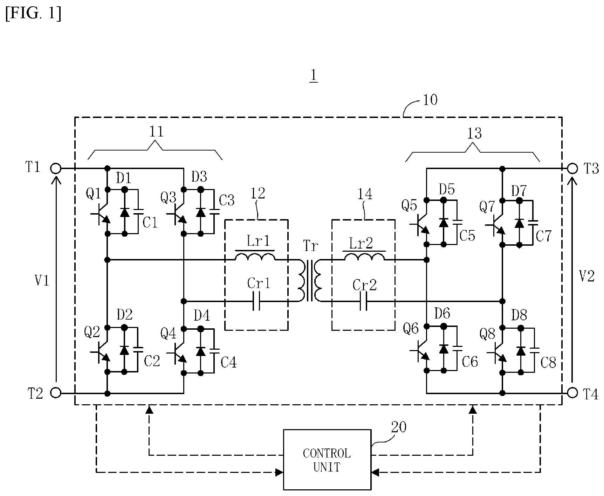

Fig. 1 illustrates a current resonant DC/DC converter (hereinafter, simply referred to as a "single-phase current resonant DC/DC converter") 1 of a bidirectional CLLC single phase full bridge configuration according to a first embodiment of the present invention. The single-phase current resonant DC/DC converter 1 includes a main circuit unit 10 and a control unit 20. The main circuit unit 10 includes a transformer circuit Tr, a primary-side switching circuit 11, a primary-side resonant circuit 12, a secondary-side rectifier circuit 13, a secondary-side resonant circuit 14, and terminals T1 to T4.

The transformer circuit Tr includes one or a plurality of high-frequency isolation transformers. The high-frequency isolation transformer includes a primary-side coil and a secondary-side coil. The primary-side coil is connected to the primary-side switching circuit 11 via the primary-side resonant circuit 12, and the secondary-side coil is connected to the secondary-side rectifier circuit 13 via the secondary-side resonant circuit 14.

The primary-side switching circuit 11 is a circuit having a full-bridge configuration includes switching elements Q1 to Q4 (corresponding to "primary-side switching elements" of the present invention). That is, the primary-side switching circuit 11 includes a first leg and a second leg (corresponding to the "primary-side legs" of the present invention) connected in parallel, and in the first leg, a set of switching elements Q1 and Q2 connected in series constitute upper and lower arms, and in the second leg, a set of switching elements Q3 and Q4 connected in series constitute upper and lower arms. Note that, although each of the switching elements Q1 to Q4 is constituted by one switching element, the switching elements Q1 to Q4 may be constituted by two or more switching elements connected in parallel for current distribution.

For the switching elements Q1 to Q4, for example, a power semiconductor such as an insulated gate bipolar transistor (IGBT), a metal oxide semiconductor field effect transistor (MOSFET) using silicon carbide (SiC) or gallium nitride (GaN) can be used. In addition, it is desirable, as an LLC drive circuit, that reverse connected diodes (hereinafter, diodes) D1 to D4 for regeneration and partial resonant capacitors (hereinafter, capacitors) C1 to C4 for soft switching are connected in parallel to the current paths of the switching elements Q1 to Q4. The diodes D1 to D4 may be built-in diodes of the switching elements Q1 to Q4 or external diodes. The capacitors C1 to C4 may be parasitic capacitances of the switching element Q1 to Q4, external capacitors, or a combination thereof.

The primary-side resonant circuit 12 includes a resonant coil Lr1 and a resonant capacitor Cr1. The resonant coil Lr1 and the resonant capacitor Cr1 constitute an LLC resonant circuit together with an excitation coil and a primary-side coil of the transformer circuit Tr. Note that the excitation coil of the transformer circuit Tr is not illustrated as being included in the transformer circuit Tr. The resonant coil Lr1 may be constituted by only the leakage flux of the transformer circuit Tr, or may be constituted by the leakage flux and an individual coil.

The secondary-side rectifier circuit 13 is a circuit having a full-bridge configuration includes switching elements Q5 to Q8 (corresponding to "secondary-side switching elements" of the present invention). That is, the secondary-side rectifier circuit 13 includes a third leg and a fourth leg (corresponding to the "secondary-side legs" of the present invention) connected in parallel, and in the third leg, a set of switching elements Q5 and Q6 connected in series constitute upper and lower arms, and in the fourth leg, a set of switching elements Q7 and Q8 connected in series constitute upper and lower arms. Note that, although each of the switching elements Q5 to Q8 is constituted by one switching element, the switching elements Q5 to Q8 may be constituted by two or more switching elements connected in parallel for current distribution.

For the switching elements Q5 to Q8, for example, power semiconductors similar to those of the switching elements Q1 to Q4 can be used. Further, reverse connected diodes (hereinafter, diodes) D5 to D8 for rectification and partial resonant capacitors (hereinafter, capacitors) C5 to C8 are connected in parallel to the current paths of the switching elements Q5 to Q8. Note that the diodes D5 to D8 may be built-in diodes of the switching elements Q5 to Q8 or external diodes, and the capacitors C5 to C8 may be parasitic capacitors of the switching elements Q5 to Q8, and need not be present during the operation of the rectifier circuit. As described above, the secondary-side rectifier circuit 13 has the same configuration as the primary-side switching circuit 11, and the switching elements Q5 to Q8, the diodes D5 to D8, and the capacitors C5 to C8 have the same configuration as the primary-side switching elements Q1 to Q4, the diodes D1 to D4, and the capacitors C1 to C4.

The secondary-side resonant circuit 14 includes a resonant coil Lr2 and a resonant capacitor Cr2. The resonant coil Lr2 and the resonant capacitor Cr2 constitute an LLC resonant circuit together with an excitation coil and a secondary-side coil of the transformer circuit Tr. That is, the secondary-side resonant circuit 14 has the same configuration as the primary-side resonant circuit 12, and the main circuit unit 10 is a symmetric circuit with the transformer circuit Tr interposed therebetween.

The control unit 20 includes a control circuit for controlling the switching elements Q1 to Q4 of the primary-side switching circuit 11 and the switching elements Q5 to Q8 of the secondary-side rectifier circuit 13. The control circuit of the control unit 20 includes a control processor, a memory, and a peripheral circuit, for example, a microcontroller or a DSP can be used. In addition, the control unit 20 includes a detection circuit includes a sensor and an AD converter to detect necessary voltage, current and the like for control. However, the description and illustration of the detection circuit are omitted.

The control unit 20 monitors an input (input current, input voltage, or input power) of the main circuit unit 10 and controls switching (ON/OFF) of the switching elements Q1 to Q8 so that an output (output current, output voltage, or output power) of the main circuit unit 10 becomes a desired value.

Specifically, the control unit 20 performs the frequency modulation control, frequency phase shift conversion control (corresponding to "output suppression conversion control" of the present invention), and frequency boost conversion control (corresponding to "output increase conversion control" of the present invention). Each of these controls is frequency control. The frequency phase shift conversion control is different from the conventional phase shift control in that a phase shift amount calculated using a driving frequency (switching frequency) is used as a control amount. The frequency boost conversion control is different from the conventional boost control in that a boost amount calculated using a driving frequency (switching frequency) is used as a control amount.

Hereinafter, it is assumed that a chargeable/dischargeable battery (for example, a battery of an electric vehicle) is connected to the terminals T1 and T2, and a DC terminal of a DC/AC inverter is connected to the terminals T3 and T4. In addition, the main circuit unit 10 performs a discharging operation of generating a bus voltage (output voltage) V2 for the DC/AC inverter on the basis of a battery voltage (input voltage) V1.

The control unit 20 during the discharge operation controls the switching elements Q1 to Q4 on the drive side and the switching elements Q5 to Q8 on the rectification side so that the output voltage V2 becomes a desired value while monitoring the input voltage V1. For example, the control unit 20 during the frequency modulation control turns on and off the switching elements Q1 to Q4 at an appropriate driving frequency, and performs synchronous rectification control or diode rectification control on the switching elements Q5 to Q8. Hereinafter, in order to simplify the description, it is assumed that the switching elements Q5 to Q8 are turned off to perform diode rectification (perform the diode rectification control).

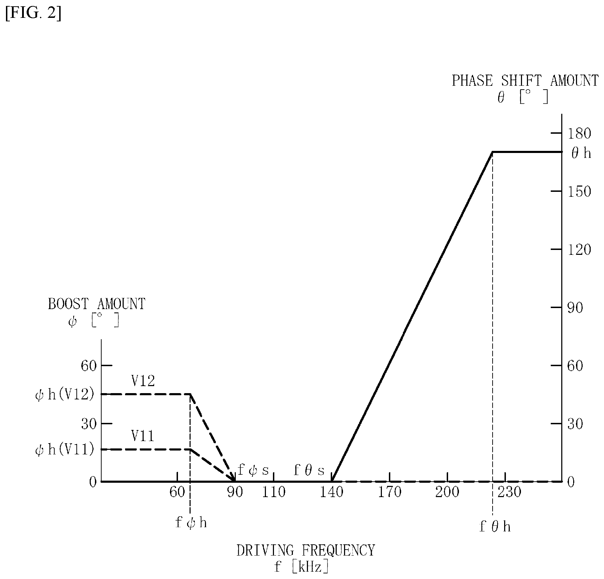

Fig. 2 illustrates a relationship between a driving frequency f of the switching elements Q1 to Q4 during the discharge operation, a phase shift amount θ of the frequency phase shift conversion control, and a boost amount ψ of the frequency boost conversion control. The phase shift amount θ corresponds to a "first control amount" of the present invention, and the boost amount ψ corresponds to a "second control amount" of the present invention. Here, the phase shift amount θ is a phase difference between the first leg (switching elements Q1 and Q2) and the second leg (switching elements Q3 and Q4) of the primary-side switching circuit 11. The boost amount ψ is expressed as a value by [°], representing a period during any of the switching elements Q5 to Q8 of the secondary-side rectifier circuit 13 is turned on to be short-circuited during a period when the resonant current flows in the primary-side resonant circuit 12.

When the driving frequency f is included in the range from a predetermined second frequency fψs (in Fig. 2, 90 [kHz]) to a first frequency fθs (in Fig. 2, 140 [kHz]), the control unit 20 performs the frequency modulation control to control the output of the main circuit unit 10 with the driving frequency f as a control amount. The control unit 20 during the frequency modulation control decreases the driving frequency f to increase the output, and increases the driving frequency f to reduce the output. Note that, in Fig. 2, the high resonance frequency fr determined by the resonant coil Lr1 and the resonant capacitor Cr1 is set to 125 kHz, and the low resonance frequency f0 determined by the resonant coil Lr1, the resonant capacitor Cr1 and also the excitation coil of the transformer circuit Tr is set to 30 kHz. That is, each frequency is operationally set as f0 < fψs < fr < fθs.

When the driving frequency f increases in accordance with the decrease in the output, and the driving frequency f exceeds 140 [kHz], which is the first frequency fθs, the control unit 20 starts the frequency phase shift conversion control. The control unit 20 sets the phase shift amount θ, which is the control amount of the frequency phase shift conversion control, to a value obtained by multiplying the difference between the driving frequency f and the first frequency fθs at that time by a first gain Kθ. The first gain Kθ is a predetermined frequency phase shift conversion gain. The control unit 20 during the frequency phase shift conversion control decreases the phase shift amount θ when increasing the output, and increases the phase shift amount θ when reducing the output.

When the phase shift amount θ increases in accordance with further reduce in the output and the driving frequency f exceeds 225 [kHz], which is a maximum phase shift driving frequency fθh, the control unit 20 fixes the phase shift amount θ to 170°, which is a maximum phase shift amount θh (corresponding to a "first maximum control amount" of the present invention). Note that the phase shift amount θ [°] is an angle of the driving frequency f with respect to one cycle T (T = 360°), and has a value in a range of 0° to a maximum of 180°.

On the other hand, when the driving frequency f decreases in accordance with the increase in the output and the driving frequency f falls below 90 [kHz], which is the second frequency fψs, the control unit 20 starts the frequency boost conversion control. The control unit 20 sets the boost amount ψ, which is the control amount of the frequency boost conversion control, to a value obtained by multiplying the difference between the second frequency fψs and the driving frequency f at that time by a second gain Kψ. The second gain Kψ is a predetermined frequency boost conversion gain, and is Kψ(V11) when the battery voltage V1x, which is the input voltage V1, is V11 (in Fig. 2, V11 = 300 [V]), and is Kψ(V12) (where Kψ(V12) > Kψ(V11)) when the battery voltage V1x is V12 (in Fig. 2, V12 = 150 [V]). The control unit 20 during the frequency boost conversion control increases the boost amount ψ to increase the output, and decreases the boost amount ψ to reduce the output.

When the boost amount ψ increases in accordance with further increase in the output and the driving frequency f falls below 67 [kHz], which is a maximum boost driving frequency fψh, the control unit 20 fixes the boost amount ψ to a maximum boost amount ψh (corresponding to a "second maximum control amount" of the present invention). In Fig. 2, the maximum boost amount ψh(V11) is 15° when the battery voltage V1x is V11, and the maximum boost amount ψh(V12) is 45° when the battery voltage V1x is V12.

In the frequency boost conversion control, the switching elements Q5 and Q6 are turned on to perform boost driving. However, performing the boost driving causes the resonant current to be short-circuited in the secondary-side rectifier circuit 13 and large energy is accumulated in the resonant coils Lr1 and Lr2 in a short time. Thus the output greatly changes with respect to a change in a boost pulse width (boost amount ψ) for turning on the switching elements Q5 and Q6. Therefore, depending on the battery voltage V1x, the control may become unstable. In this regard, in the present embodiment, since the second gain Kψ and the maximum boost amount ψh are varied according to the battery voltage V1x, it is possible to adjust the slope of the boost amount ψ in conjunction with the battery voltage V1x, and it is possible to avoid unstable control while increasing the step-up ratio in accordance with the input/output conditions.

For example, the control unit 20 may store a predetermined input/output condition (input voltage V1, input/output voltage ratio V1/V2, or output power) and the second gain Kψ and the maximum boost amount ψh associated with the input/output condition in advance in the memory, acquire the input/output information by the detection circuit, read the second gain Kψ and the maximum boost amount ψh from the memory on the basis of the detected input/output information, and start the frequency boost conversion control. As described above, by varying the second gain Kψ and the maximum boost amount ψh according to the input/output conditions, it is possible to obtain an optimum step-up ratio even when the input voltage V1 is low, and it is possible to appropriately expand the range of the output voltage V2. Note that, similar to the second gain Kψ and the maximum boost amount ψh, the second frequency fψs may be varied by the input/output condition.

In addition, the first gain Kθ, the maximum phase shift amount θh, and the first frequency fθs may be varied by input/output conditions. For example, the control unit 20 may store a predetermined input/output condition, and the first gain Kθ, the maximum phase shift amount θh, and the first frequency fθs associated with the input/output condition in advance in a memory, acquire input/output information by the detection circuit, read the first gain Kθ, the maximum phase shift amount θh, and the first frequency fθs from the memory on the basis of the detected input/output information, and start the frequency phase shift conversion control.

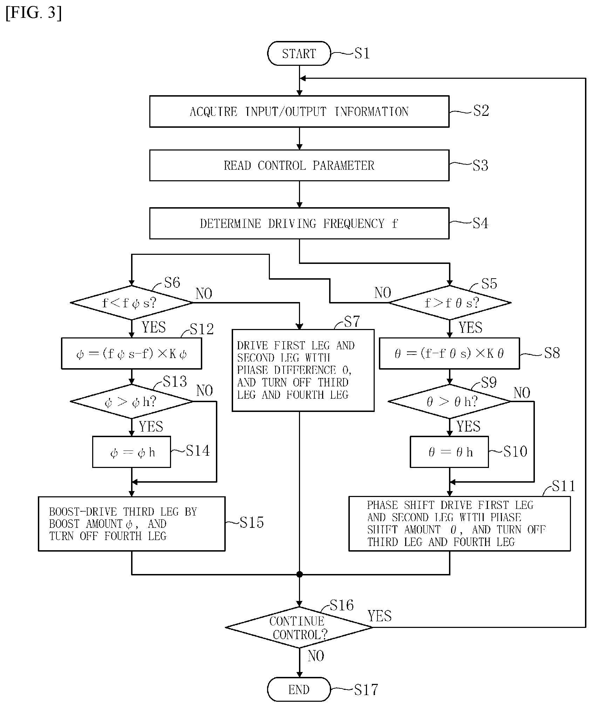

Fig. 3 is a control flowchart regarding transition control among the frequency modulation control, the frequency phase shift conversion control, and the frequency boost conversion control by the control circuit of the control unit 20. Note that it is assumed that the control unit 20 before performing the transition control performs the frequency modulation control to turn on and off the switching elements Q1 to Q4 at an appropriate driving frequency f and turn off the switching elements Q5 to Q8 to cause the secondary-side rectifier circuit 13 to perform diode rectification.

When the transition control is started (S1), the control unit 20 acquires input/output information by the detection circuit (S2). The input/output information includes at least one output value of the input voltage V1, the input current, the output voltage V2, or the output current.

After acquired the input/output information, the control unit 20 reads control parameters from the memory (S3). The control parameters include the first frequency fθs, the first gain Kθ, the maximum phase shift amount θh, the second frequency fψs, the second gain Kψ, and the maximum boost amount ψh. As illustrated in Fig. 2, the second gain Kψ and the maximum boost amount ψh have different values according to the input voltage V1. Note that the fixed parameters among the control parameters may be read only once at the start of the transition control.

Next, the control unit 20 compares the output value (output current value, output voltage value, or output power value) included in the input/output information with the target value (target output current value, target output voltage value, or target output power value), and determines the driving frequency f of the switching elements Q1 to Q4 so that the output value approaches the target value (S4). For example, when the input/output information includes the output value of the output voltage V2 and the target value is the target output voltage value, the control unit 20 compares the output value of the output voltage V2 with the target output voltage value, and determines the driving frequency f so that the output value of the output voltage V2 approaches the target output voltage value.

When the output value is lower than the target value, the control unit 20 decreases the driving frequency f to increase the output. On the other hand, when the output value is higher than the target value, the control unit 20 increases the driving frequency f to reduce the output. Note that the target value may be, for example, a value preset in the single-phase current resonant DC/DC converter 1, a value determined from input/output conditions, or a value input from an external device.

The control unit 20 determines whether the driving frequency f determined in step S4 is higher than the first frequency fθs read in step S3 (S5). If the driving frequency f is not higher than the first frequency fθs (NO in S5), the control unit 20 determines whether the driving frequency f determined in step S4 is lower than the second frequency fψs read in step S3 (S6).

If the driving frequency f is not lower than the second frequency fψs (NO in S6), the control unit 20 performs the frequency modulation control. At the time of the frequency modulation control, the control unit 20 sets the phase difference between the switching elements Q1 and Q2 of the first leg and the switching elements Q3 and Q4 of the second leg to 0 to turn on and off the switching elements Q1 to Q4 at the driving frequency f determined in step S4, and turns off the switching elements Q5 and Q6 of the third leg and the switching elements Q7 and Q8 of the fourth leg to cause the secondary-side rectifier circuit 13 to perform diode rectification (S7).

In step S5, when the driving frequency f is higher than the first frequency fθs (YES in S5), the control unit 20 performs the frequency phase shift conversion control. The control unit 20 during the frequency phase shift conversion control multiplies the difference between the driving frequency f determined in step S4 and the first frequency fθs by the first gain Kθ read in step S3 to calculate the phase shift amount θ (S8).

After calculating the phase shift amount θ, the control unit 20 determines whether the phase shift amount θ is larger than the maximum phase shift amount θh read in step S3 (S9). When the phase shift amount θ is larger than the maximum phase shift amount θh (YES in S9), the control unit 20 fixes the phase shift amount θ to the maximum phase shift amount θh by changing the phase shift amount θ calculated in step S8 to the maximum phase shift amount θh (S10), and proceeds to the next step S11. When the phase shift amount θ is equal to or smaller than the maximum phase shift amount θh (NO in S9), the control unit 20 proceeds to step S11 while keeping the phase shift amount θ as the phase shift amount θ calculated in step S8.

After proceeding to step S11, the control unit 20 drives the primary-side switching circuit 11 to shift the phase. Specifically, the control unit 20 shifts the phase of the second leg by the phase shift amount θ relative to the phase of the first leg to turn on and off the switching elements Q1 to Q4 at the driving frequency f determined in step S4, and turns off the switching elements Q5 and Q6 of the third leg and the switching elements Q7 and Q8 of the fourth leg to cause the secondary-side rectifier circuit 13 to perform diode rectification (S11).

In step S6, when the driving frequency f is lower than the second frequency fψs (YES in S6), the control unit 20 performs the frequency boost conversion control. The control unit 20 during the frequency boost conversion control multiplies the difference between the second frequency fψs and the driving frequency f determined in step S4 by the second gain Kψ read in step S3 to calculate the boost amount ψ (S12).

After calculating the boost amount ψ, the control unit 20 determines whether the boost amount ψ is larger than the maximum boost amount ψh read in step S3 (S13). When the boost amount ψ is larger than the maximum boost amount ψh (YES in S13), the control unit 20 fixes the boost amount ψ to the maximum boost amount ψh by changing the boost amount ψ calculated in step S12 to the maximum boost amount ψh (S14), and proceeds to the next step S15. When the boost amount ψ is equal to or smaller than the maximum boost amount ψh (NO in S13), the control unit 20 proceeds to step S15 while keeping the boost amount ψ at the boost amount ψ calculated in step S12.

After proceeding to step S15 the control unit 20 drives the secondary-side rectifier circuit 13 to boost. Specifically, the control unit 20 sets the phase difference between the first leg and the second leg to 0, turns on and off the switching elements Q1 to Q4 at the driving frequency f determined in step S4, turns on the switching elements Q5 and Q6 of the third leg by the boost amount ψ in synchronization with the first leg, and turns off the switching elements Q7 and Q8 of the fourth leg to perform diode rectification (S15).

After steps S7, S11, and S15, the control unit 20 determines whether to continue the control (S16). The control unit 20 makes the determination in step S16 on the basis of, for example, whether a control termination command has been received from an external device. When the control termination command has not been received, the control unit 20 determines to continue the transition control (YES in S16), returns to step S2, and repeats the processing of step S2 and subsequent steps. When the control unit 20 has received the control termination command, it determines not to continue the transition control (NO in S16), and ends the transition control (S17).

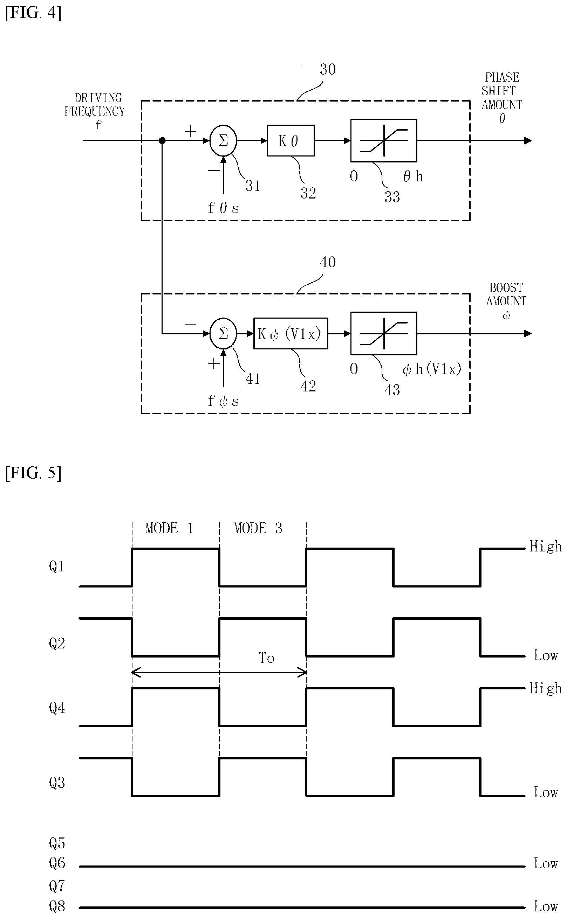

Fig. 4 is a control block diagram of the frequency phase shift conversion control and the frequency boost conversion control by the control unit 20. Note that the phase shift amount θ [°] and the boost amount ψ [°] are angles when the cycle T of the driving frequency f [Hz] is 360°.

The control unit 20 includes a frequency phase shift conversion control block 30 and a frequency boost conversion control block 40. The frequency phase shift conversion control block 30 includes a first calculation unit 31, a first multiplication unit 32, and a first clamp unit 33 The frequency boost conversion control block 40 includes a second calculation unit 41, a second multiplication unit 42, and a second clamp unit 43.

When reducing the output, the control unit 20 increases the driving frequency f of the switching elements Q1 to Q4. When the driving frequency f is higher than the first frequency fθs, the first calculation unit 31 outputs a difference between the driving frequency f and the first frequency fθs to the first multiplication unit 32. The first multiplication unit 32 multiplies the difference by the first gain Kθ to calculate the phase shift amount θ, and outputs the phase shift amount θ to the first clamp unit 33. The first clamp unit 33 outputs the phase shift amount θ [°] = (f - fθs) × Kθ ≤ θh with the upper limit of the phase shift amount θ as the maximum phase shift amount θh.

The control unit 20 drives the primary-side switching circuit 11 to shift the phase on the basis of the phase shift amount θ [°] = (f - fθs) × Kθ ≤ θh. Specifically, the control unit 20 shifts the phase by the phase shift amount θ (by the phase shift amount θ with respect to the cycle T) with respect to the on/off of the switching elements Q1 and Q2 of the first leg, and turns on/off the switching elements Q3 and Q4 of the second leg.

In the frequency phase shift conversion control block 30, since the driving frequency f increases when the output is reduced, the difference (f - fθs) output from the first calculation unit 31 increases. Until the driving frequency f reaches the maximum phase shift driving frequency fθh (see Fig. 2), the phase shift amount θ uniformly increases with the increase in the driving frequency f When the driving frequency f exceeds the maximum phase shift driving frequency fθh, the phase shift amount θ is fixed to the maximum phase shift amount θh. Note that the control unit 20 controls the driving frequency f such that it does not increase beyond the maximum phase shift driving frequency fθh.

When increasing the output, the control unit 20 reduces the driving frequency f of the switching elements Q1 to Q4. When the driving frequency f is lower than the second frequency fψs, the second calculation unit 41 outputs a difference between the second frequency fψs and the driving frequency f to the second multiplication unit 42. The second multiplication unit 42 calculates the boost amount ψ by multiplying the difference by the second gain Kψ (V1x) and outputs the boost amount ψ to the second clamp unit 43. The second clamp unit 43 outputs the boost amount ψ [°] = (fψs - f) × Kψ(V1x) ≤ ψh(V1x) with the upper limit of the boost amount ψ as the maximum boost amount ψh(V1x). The second gain Kψ(V1x) and the maximum boost amount ψh(V1x) are amounts that vary according to the battery voltage V1x (see, for example, V11 and V12 in Fig. 2) which is the input voltage V1.

The control unit 20 drives the secondary-side rectifier circuit 13 to boost on the basis of the boost amount ψ [°] = (fψs - f) × Kψ(V1x) ≤ ψh(V1x). Specifically, the control unit 20 turns on the switching elements Q5 and Q6 of the third leg by the boost amount ψ (the boost amount ψ with respect to the cycle T) in synchronization with the switching elements Q1 and Q2 of the first leg, and turns off the switching elements Q7 and Q8 of the fourth leg to perform diode rectification.

In the frequency boost conversion control block 40, since the driving frequency f decreases when the output is increased, the difference (fψs - f) output from the second calculation unit 41 increases. The boost amount ψ uniformly increases with the decrease of the driving frequency f until the driving frequency f decreases and reaches the maximum boost driving frequency fψh (see Fig. 2). When the driving frequency f falls below the maximum boost driving frequency fψh, the boost amount ψ is fixed to the maximum boost amount ψh(V1x). Note that the winding number ratio (step-up ratio) of the transformer circuit Tr is designed from the input/output condition such that the maximum boost driving frequency fψh is higher than the resonance frequency f0 and the driving frequency f does not decrease below the maximum boost driving frequency fψh. The control unit 20 controls the driving frequency f such that it does not reduce below the maximum boost driving frequency fψh.

Fig. 5 is a drive waveform diagram of the switching elements Q1 to Q8 during the frequency modulation control. The switching element Q1 is turned on when the drive waveform is High, and is turned off when the drive waveform is Low. Similarly, the switching elements Q2 to Q8 are turned on when the drive waveform is High, and are turned off when the drive waveform is Low.

As illustrated in Fig. 5, the drive waveforms of the switching elements Q1 and Q2 of the first leg and the drive waveforms of the switching elements Q3 and Q4 of the second leg have the same phase (phase difference is zero). The drive waveforms of the switching elements Q5 and Q6 of the third leg and the drive waveforms of the switching elements Q7 and Q8 of the fourth leg are always Low.

The control unit 20 drives the switching elements Q1 to Q4 with the cycle To and the on-duty D (for example, D = 50%) by setting the phase difference between the switching elements Q1 and Q2 of the first leg and the switching elements Q3 and Q4 of the second leg to 0, and turns off the switching elements Q5 and Q6 of the third leg and the switching elements Q7 and Q8 of the fourth leg to cause the secondary-side rectifier circuit 13 to perform diode rectification.

In addition, the control unit 20 alternately turns on and off the switching elements Q1 and Q2 constituting the first leg with a phase difference of 180°, and alternately turns on and off the switching elements Q3 and Q4 constituting the second leg with a phase difference of 180°. Note that there is a predetermined dead time between the on/off timing of the switching element Q1 and the on/off timing of the switching element Q2, and there is also a predetermined dead time between the on/off timing of the switching element Q3 and the on/off timing of the switching element Q4, but the dead time is not illustrated in order to simplify the description. The same applies to the following drawings.

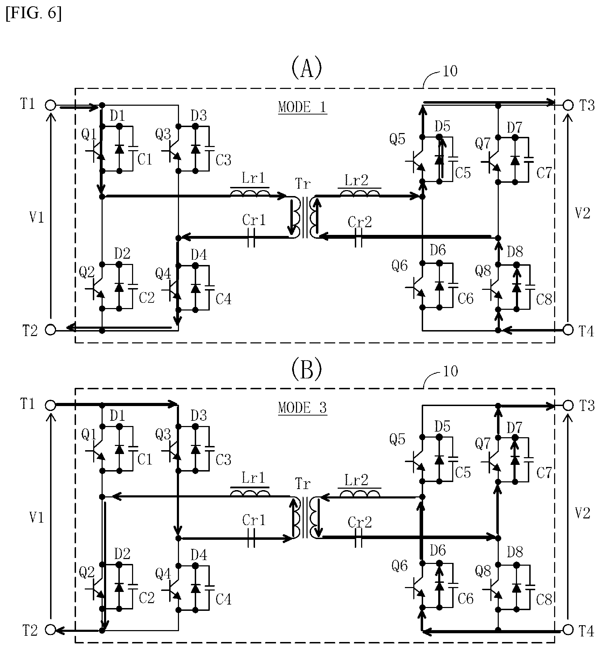

Fig. 6(A) illustrates a current flow in the main circuit unit 10 during the period of a mode 1 of Fig. 5, and Fig. 6(B) illustrates a current flow in the main circuit unit 10 during the period of a mode 3 of Fig. 5. Note that the current illustrated in Fig. 6 is a resonant current and a load current, and the excitation current is not illustrated. In addition, the current (current at the time of transition) when the switching elements Q1 to Q4 are turned on and off is also not illustrated.

During the period of the mode 1 in Fig. 5, the switching elements Q1 and Q4 are turned on, and the switching elements Q2 and Q3 are turned off. As illustrated in Fig. 6(A), the battery voltage V1 is applied between the terminals T1 and T2, and the resonant current flows through the resonant coil Lr1 and the resonant capacitor Cr1 via the switching elements Q1 and Q4. As a result, on the rectification side, the load current flows between the terminals T3 and T4 via the diodes D5 and D8.

During the period of the mode 3 in Fig. 5, the switching elements Q1 and Q4 are turned off, and the switching elements Q2 and Q3 are turned on. As illustrated in Fig. 6(B), the battery voltage V1 is applied between the terminals T1 and T2, and the resonant current in a direction opposite to the mode 1 flows through the resonant coil Lr1 and the resonant capacitor Cr1 via the switching elements Q2 and Q3. As a result, on the rectification side, the load current flows between the terminals T3 and T4 via the diodes D6 and D7.

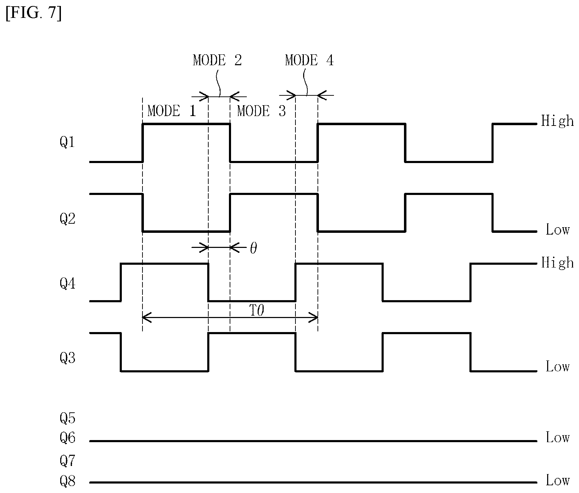

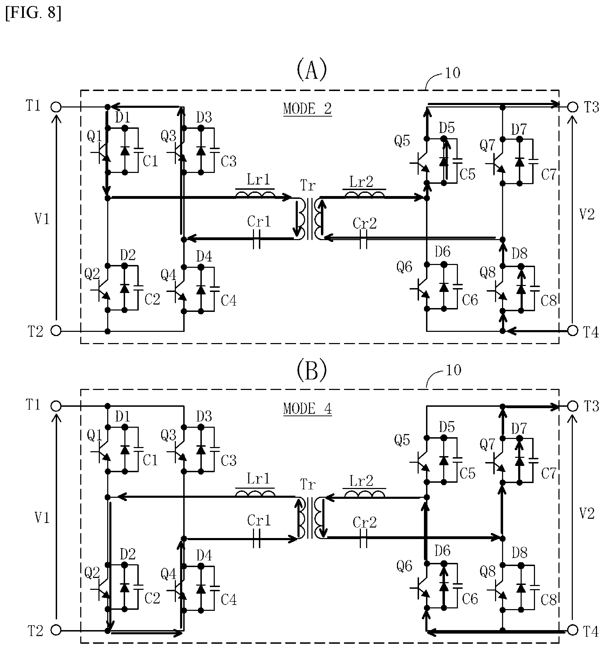

Fig. 7 is a drive waveform diagram of the switching elements Q1 to Q8 during the frequency phase shift conversion control. Fig. 8(A) illustrates a current flow in the main circuit unit 10 during the period of a mode 2 in Fig. 7, and Fig. 8(B) illustrates a current flow in the main circuit unit 10 during the period of a mode 4 in Fig. 7. Note that the current illustrated in Fig. 8 is a resonant current and a load current, and the excitation current and the current at the time of transition are not illustrated.

As illustrated in Fig. 7, the drive waveforms of the switching elements Q3 and Q4 of the second leg are shifted in phase by the phase shift amount θ relative to the drive waveforms of the switching elements Q1 and Q2 of the first leg. The driving frequency f of the switching elements Q1 to Q4 increases by the amount obtained by dividing the phase shift amount θ by the first gain Kθ, and the cycle Tθ is shorter than the cycle To in Fig. 5. The drive waveforms of the switching elements Q5 and Q6 of the third leg and the drive waveforms of the switching elements Q7 and Q8 of the fourth leg are always Low and off.

The states of the switching elements Q1 to Q4 during the periods of the mode 1 and the mode 3 in Fig. 7 are the same as those in the cases of the mode 1 and the mode 3 in Fig. 5, and the current flow in the main circuit unit 10 during the periods is the same as those in (A) and (B) of Fig. 6. However, since each period of the mode 1 and the mode 3 of Fig. 7 is shortened by at least the phase shift amount θ, the resonant current decreases and the load current also decreases as compared with the case of the mode 1 and the mode 3 of Fig. 5.

During the period of the mode 2 in Fig. 7, the switching elements Q1 and Q3 are turned on, and the switching elements Q2 and Q4 are turned off. As illustrated in Fig. 8(A), the resonant current on the drive side continues to flow via the switching elements Q1 and Q3, but gradually decreases to zero. Similarly, the load current on the rectification side continues to flow via the diodes D5 and D8, but gradually decreases to zero.

During the period of the mode 4 in Fig. 7, the switching elements Q2 and Q4 are turned on, and the switching elements Q1 and Q3 are turned off. As illustrated in Fig. 8(B), the resonant current on the drive side continues to flow via the switching elements Q2 and Q4, but gradually decreases to zero. Similarly, the load current on the rectification side continues to flow via the diodes D6 and D7, but gradually decreases to zero.

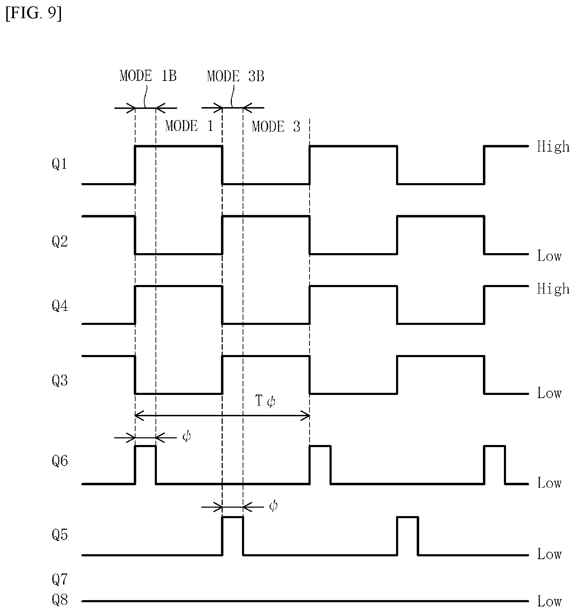

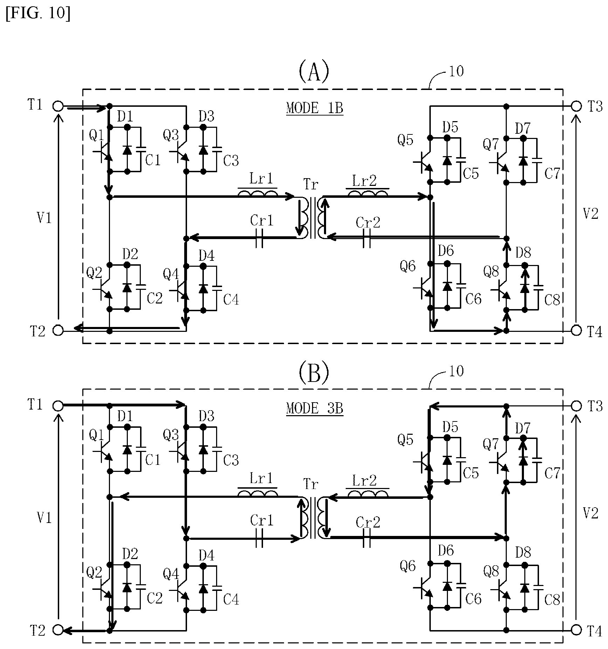

Fig. 9 is a drive waveform diagram of the switching elements Q1 to Q8 during the frequency boost conversion control. In addition, Fig. 10(A) illustrates a current flow in the main circuit unit 10 during the period of a mode 1B of Fig. 9, and Fig. 10(B) illustrates a current flow in the main circuit unit 10 during the period of a mode 3B of Fig. 9. Note that the current illustrated in Fig. 10 is a resonant current and a load current, and the excitation current and the current at the time of transition are not illustrated.

As illustrated in Fig. 9, the drive waveforms of the switching elements Q1 and Q2 of the first leg and the drive waveforms of the switching elements Q3 and Q4 of the second leg have the same phase (phase difference is zero). The driving frequency f of the switching elements Q1 to Q4 decreases by the amount obtained by dividing the boost amount ψ by the second gain Kψ, and the cycle Tψ is longer than the cycle To in Fig. 5.

The drive waveform of the switching element Q6 of the third leg becomes High in synchronization with the drive waveform of the switching element Q1 of the first leg (or the drive waveform of the switching element Q4 of the second leg), and becomes Low after the period of the boost amount ψ (the period of the mode 1B) elapses. The drive waveform of the switching element Q5 of the third leg becomes High in synchronization with the drive waveform of the switching element Q2 of the first leg (or the drive waveform of the switching element Q3 of the second leg), and becomes Low after the period of the boost amount ψ (the period of the mode 3B) elapses. The drive waveforms of the switching elements Q7 and Q8 of the fourth leg are always Low.

The states of the switching elements Q1 to Q8 during the periods of the mode 1 and the mode 3 in Fig. 9 are the same as those in the cases of the mode 1 and the mode 3 in Fig. 5, and the current flow in the main circuit unit 10 during the periods is the same as those in (A) and (B) of Fig. 6.

During the period of the mode 1B in Fig. 9, the switching elements Q1, Q4, and Q6 are turned on, and the switching elements Q2, Q3, Q5, Q7, and Q8 are turned off. As illustrated in Fig. 10(A), the battery voltage V1 is applied between the terminals T1 and T2, and the resonant current flows through the resonant coil Lr1 and the resonant capacitor Cr1 via the switching elements Q1 and Q4. The rectification side is in a short-circuit state, a current path passing through the switching element Q6 and the diode D8 is formed, and a current continues to flow. Therefore, a large resonant current flows through the resonant coil Lr1 and the resonant capacitor Cr1, and large energy is accumulated. The stored energy flows as the load current between the terminals T3 and T4 in the next the mode 1. Thus, the step-up operation is performed in the main circuit unit 10.

During the period of the mode 3B in Fig. 9, the switching elements Q2, Q3, and Q5 are turned on, and the switching elements Q1, Q4, and Q6 to Q8 are turned off. As illustrated in Fig. 10(B), the battery voltage V1 is applied between the terminals T1 and T2, and the resonant current in a direction opposite to the mode 1B flows through the resonant coil Lr1 and the resonant capacitor Cr1 via the switching elements Q2 and Q3. The rectification side is in a short-circuit state, a current path passing through the switching element Q5 and the diode D7 is formed, and a current continues to flow. Therefore, a large resonant current flows through the resonant coil Lr1 and the resonant capacitor Cr1, and large energy is accumulated. The stored energy flows as the load current between the terminals T3 and T4 in the next mode 3. Thus, the step-up operation is performed in the main circuit unit 10.

As described above, when the driving frequency f exceeds the first frequency fθs in an attempt to reduce the output, the single-phase current resonant DC/DC converter 1 performs the frequency phase shift conversion control with the phase shift amount θ corresponding to (f - fθs) × Kθ. During the periods of the mode 2 and the mode 4 of the frequency phase shift conversion control, the battery voltage V1 is not applied to the drive side, and the main circuit unit 10 performs the output suppression operation (step-down operation).

In addition, when the driving frequency f falls below the second frequency fψs in an attempt to increase the output, the single-phase current resonant DC/DC converter 1 performs the frequency boost conversion control with the boost amount ψ corresponding to (fψs - f) × Kψ. During the periods of the mode 1B and the mode 3B at the time of the frequency boost conversion control, energy due to the resonant current is accumulated, and the energy is converted into the load current in the next periods of the mode 1 and the mode 3. That is, the main circuit unit 10 performs an output increase operation (step-up operation).

Since both the phase shift amount θ of the frequency phase shift conversion control and the boost amount ψ at the time of the frequency boost conversion control are control amounts correlated with the driving frequency f, in the single-phase current resonant DC/DC converter 1, it is not necessary to perform control by switching to another control mode. There is no need to take measures against the change in output due to the switching of control mode, and control can be performed only on the basis of frequency control. Therefore, with the single-phase current resonant DC/DC converter 1, it is possible to cope with a wide range of output voltage without adding an element and a circuit and without complicating a software configuration for control.

Furthermore, in the single-phase current resonant DC/DC converter 1, control parameters (first frequency fθs, first gain Kθ, maximum phase shift amount θh, second frequency fψs, second gain Kψ, maximum boost amount ψh) can be varied according to input/output conditions (for example, input voltage V1, input/output voltage ratio V1/V2, or output power). Thus, during the frequency phase shift conversion control, the switching elements Q1 to Q4 can be turned on and off in the region where the soft switching is possible, and the power conversion efficiency of the main circuit unit 10 can be improved. In addition, during the frequency boost conversion control, the slope of the boost amount ψ can be adjusted in conjunction with the battery voltage V1x, and unstable control can be avoided.

Note that, the main circuit unit 10 performs the discharge operation of the battery connected between the terminals T1 and T2 has been described so far. However, when the main circuit unit 10 performs the charge operation of the battery, the secondary-side rectifier circuit 13 and the secondary-side resonant circuit 14 are circuits on the drive side, and the primary-side switching circuit 11 and the primary-side resonant circuit 12 are circuits on the rectification side. During the charging operation, V1 is an output voltage, and V2 is an input voltage. During the charge operation, the control unit 20 controls the secondary-side rectifier circuit 13 on the drive side in the same manner as the primary-side switching circuit 11 during the discharge operation, and controls the primary-side switching circuit 11 on the rectification side in the same manner as the secondary-side rectifier circuit 13 during the discharge operation.

### [First modification of single-phase current resonant DC/DC converter]

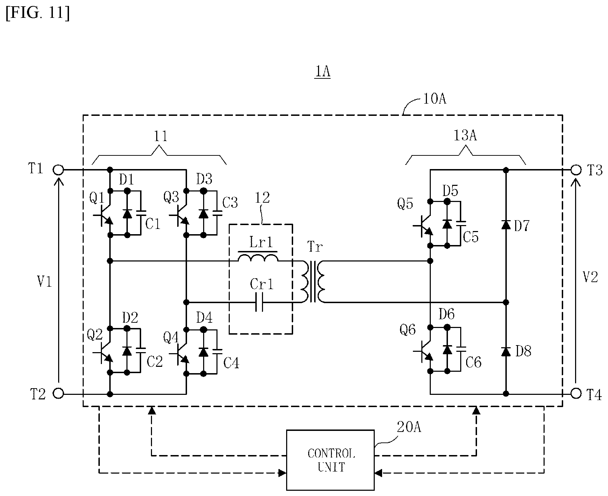

Fig. 11 illustrates a single-phase current resonant DC/DC converter 1A according to a first modification of the first embodiment. The single-phase current resonant DC/DC converter 1A includes a main circuit unit 10A and a control unit 20A. The main circuit unit 10A includes the transformer circuit Tr, the primary-side switching circuit 11, the primary-side resonant circuit 12, the secondary-side rectifier circuit 13A, and the terminals T1 to T4.

The single-phase current resonant DC/DC converter 1A is configured to perform unidirectional power transmission from the terminals T1 and T2 side (V1 side) to the terminals T3 and T4 side (V2 side). The single-phase current resonant DC/DC converter 1A is different from the first embodiment in that the single-phase current resonant DC/DC converter 1A does not include the secondary-side resonant circuit 14, includes the secondary-side rectifier circuit 13A instead of the secondary-side rectifier circuit 13, and includes the control unit 20A instead of the control unit 20, and the other points are common.

The secondary-side rectifier circuit 13A has the same configuration as the secondary-side rectifier circuit 13 of the first embodiment except that the fourth leg includes only diodes D7 and D8 connected in series.

The control unit 20A controls the switching elements Q1 to Q6 so that the main circuit unit 10A performs power transmission in one direction from the terminals T1 and T2 side (V1 side) to the terminals T3 and T4 side (V2 side). In the first embodiment, since the control during the discharge operation has been described in the state where the switching elements Q7 and Q8 are off, the control of the control unit 20A is the same as the control during the discharge operation of the first embodiment. That is, the control unit 20A includes a configuration for performing control during discharge operation among the configurations of the control unit 20, and performs the frequency modulation control, the frequency phase shift conversion control, and the frequency boost conversion control similarly to the control unit 20.

### [Second modification of single-phase current resonant DC/DC converter]

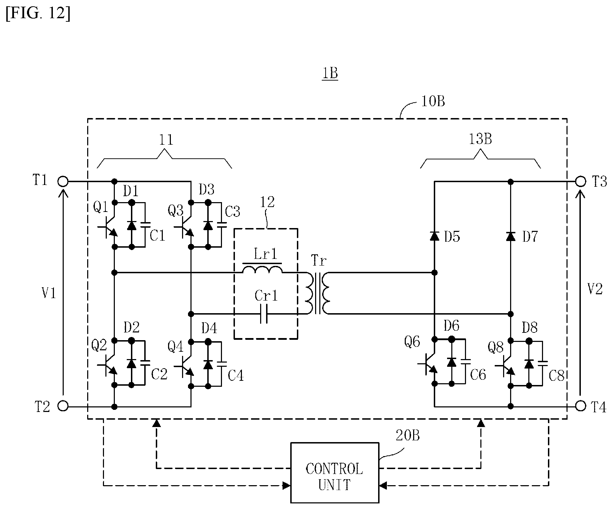

Fig. 12 illustrates a single-phase current resonant DC/DC converter 1B according to a second modification of the first embodiment. The single-phase current resonant DC/DC converter 1B includes a main circuit unit 10B and a control unit 20B. The main circuit unit 10B includes the transformer circuit Tr, the primary-side switching circuit 11, the primary-side resonant circuit 12, the secondary-side rectifier circuit 13B, and the terminals T1 to T4.

The single-phase current resonant DC/DC converter 1B is configured to perform unidirectional power transmission from the terminals T1 and T2 side (V1 side) to the terminals T3 and T4 side (V2 side). The single-phase current resonant DC/DC converter 1B is different from the first embodiment in that the single-phase current resonant DC/DC converter 1B does not include the secondary-side resonant circuit 14, includes the secondary-side rectifier circuit 13B instead of the secondary-side rectifier circuit 13, and includes the control unit 20B instead of the control unit 20, and the other points are common.

The secondary-side rectifier circuit 13B has the same configuration as the secondary-side rectifier circuit 13 of the first embodiment except that the upper arm of the third leg includes only the diode D5 and the upper arm of the fourth leg includes only the diode D7.

The control unit 20B controls the switching elements Q1 to Q4, Q6, and Q8 so that the main circuit unit 10B performs power transmission in one direction from the terminals T1 and T2 side (V1 side) to the terminals T3 and T4 side (V2 side). The control unit 20B includes a configuration for performing control during discharge operation among the configurations of the control unit 20, and performs the frequency modulation control, the frequency phase shift conversion control, and the frequency boost conversion control similarly to the control unit 20. However, the second embodiment is different from the first embodiment in that the switching elements Q6 and Q8 are turned on during the frequency boost conversion control.

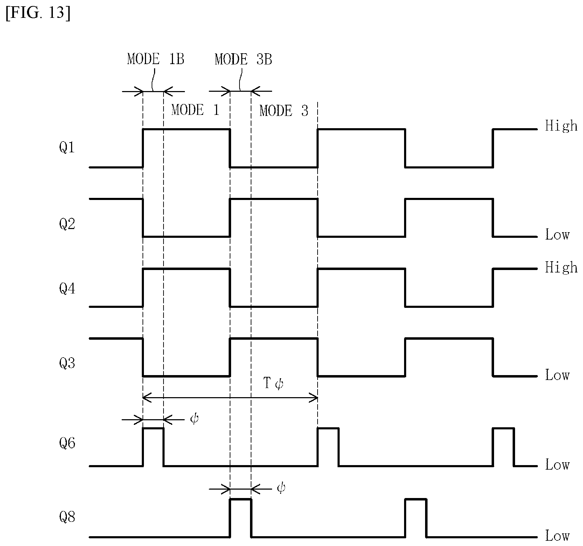

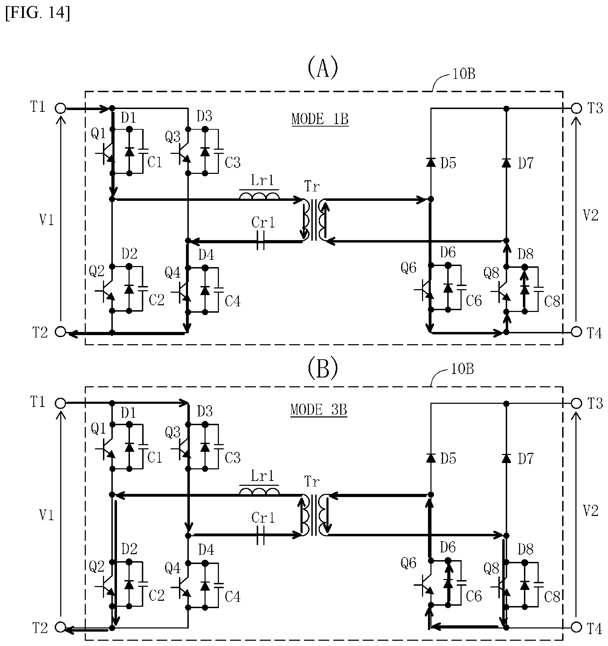

Fig. 13 is a drive waveform diagram of the switching elements Q1 to Q4, Q6, and Q8 during the frequency boost conversion control. In addition, Fig. 14(A) illustrates a current flow in the main circuit unit 10B during the period of the mode 1B of Fig. 13, and Fig. 14(B) illustrates a current flow in the main circuit unit 10B during the period of the mode 3B of Fig. 13. Note that the current illustrated in Fig. 14 is a resonant current and a load current, and the excitation current and the current during transition are not illustrated.

During the period of the mode 1B in Fig. 13, the switching elements Q1, Q4, and Q6 are turned on, and the switching elements Q2, Q3, and Q8 are turned off. As illustrated in Fig. 14(A), the battery voltage V1 is applied between the terminals T1 and T2, and the resonant current flows through the resonant coil Lr1 and the resonant capacitor Cr1 via the switching elements Q1 and Q4. The rectification side is in a short-circuit state, a current path passing through the switching element Q6 and the diode D8 is formed, and a current continues to flow. Therefore, a large resonant current flows through the resonant coil Lr1 and the resonant capacitor Cr1, and large energy is accumulated. The stored energy flows as the load current between the terminals T3 and T4 in the next the mode 1. Thus, the step-up operation is performed in the main circuit unit 10B.

During the period of the mode 3B in Fig. 13, the switching elements Q2, Q3, and Q8 are turned on, and the switching elements Q1, Q4, and Q6 are turned off. As illustrated in Fig. 14(B), the battery voltage V1 is applied between the terminals T1 and T2, and the resonant current in a direction opposite to the mode 1B flows through the resonant coil Lr1 and the resonant capacitor Cr1 via the switching elements Q2 and Q3. The rectification side is in a short-circuit state, a current path passing through the switching element Q8 and the diode D6 is formed, and a current continues to flow. Therefore, a large resonant current flows through the resonant coil Lr1 and the resonant capacitor Cr1, and large energy is accumulated. The stored energy flows as the load current between the terminals T3 and T4 in the next mode 3. Thus, the step-up operation is performed in the main circuit unit 10B.

### [Third modification of single-phase current resonant DC/DC converter]

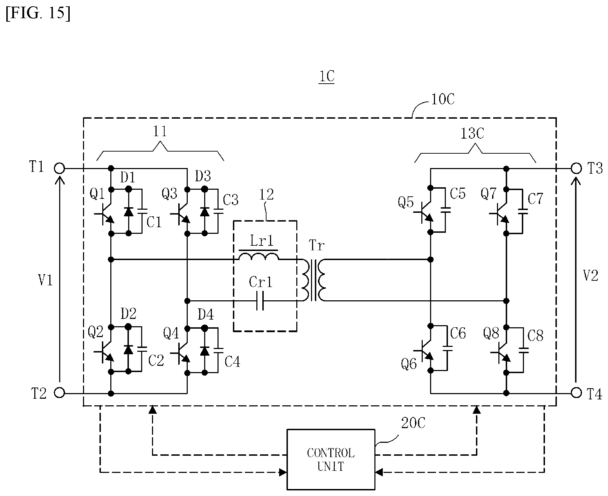

Fig. 15 illustrates a single-phase current resonant DC/DC converter 1C according to a third modification of the first embodiment. The single-phase current resonant DC/DC converter 1C includes a main circuit unit 10C and a control unit 20C. The main circuit unit 10C includes the transformer circuit Tr, the primary-side switching circuit 11, the primary-side resonant circuit 12, the secondary-side rectifier circuit 13C, and the terminals T1 to T4.

The single-phase current resonant DC/DC converter 1C is configured to perform unidirectional power transmission from the terminals T1 and T2 side (V1 side) to the terminals T3 and T4 side (V2 side). The single-phase current resonant DC/DC converter 1C is different from the first embodiment in that the single-phase current resonant DC/DC converter 1C does not include the secondary-side resonant circuit 14, includes the secondary-side rectifier circuit 13C instead of the secondary-side rectifier circuit 13, and includes the control unit 20C instead of the control unit 20, and the other points are common.

The secondary-side rectifier circuit 13C has the same configuration as the secondary-side rectifier circuit 13 of the first embodiment except that the diodes D5 to D8 are not connected to the current paths of the switching elements Q5 to Q8.

The control unit 20C has the same configuration as the control unit 20 of the first embodiment except that the frequency PWM conversion control is performed instead of the frequency phase shift conversion control. The control unit 20C performs the frequency modulation control, frequency PWM conversion control, and the frequency boost conversion control.

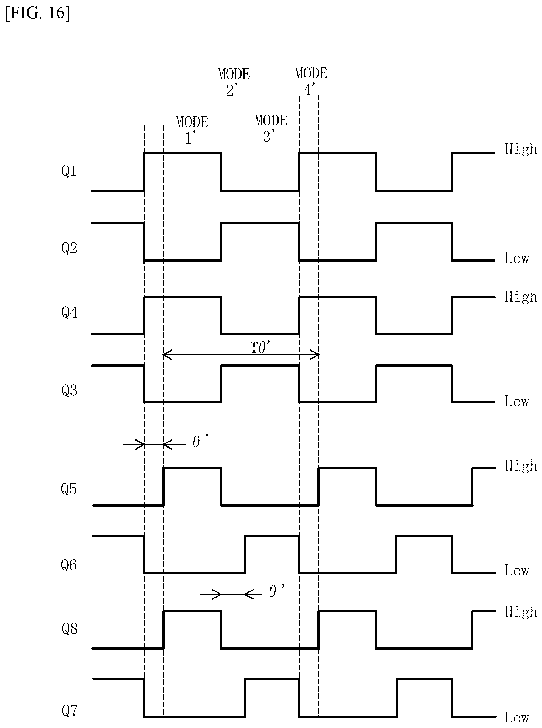

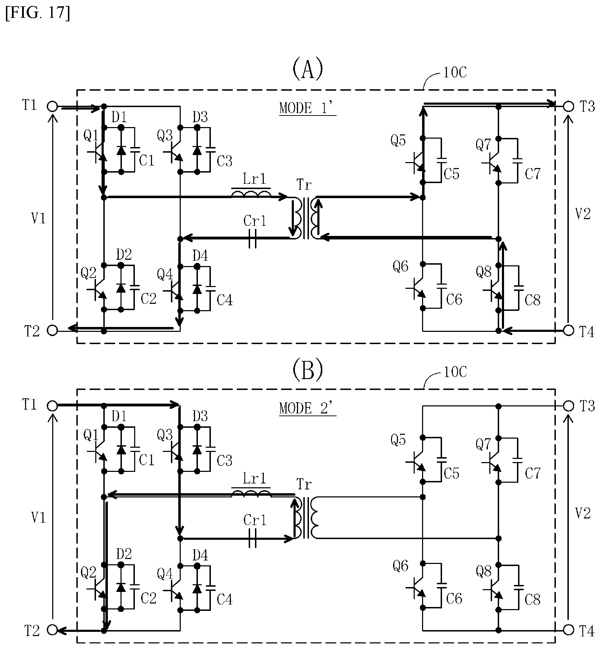

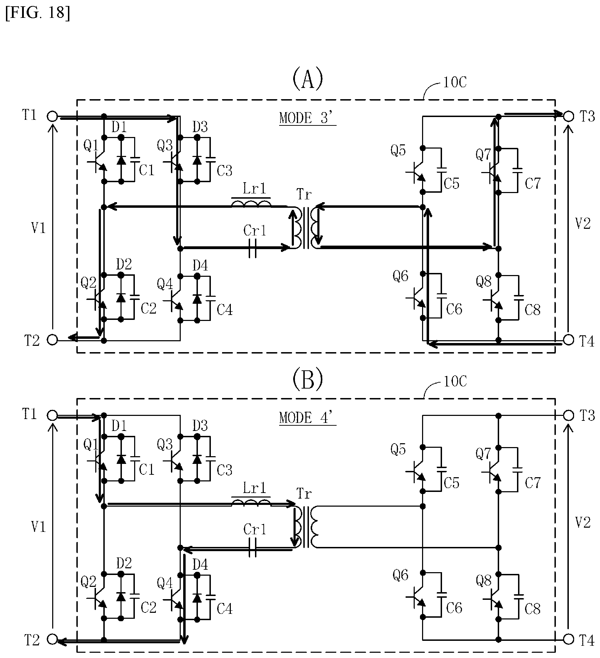

Fig. 16 is a drive waveform diagram of the switching elements Q1 to Q8 during the frequency PWM conversion control. Fig. 17(A) illustrates a current flow in the main circuit unit 10C during the period of a mode 1' in Fig. 16, and Fig. 17(B) illustrates a current flow in the main circuit unit 10C during the period of a mode 2' in Fig. 16. In addition, Fig. 18(A) illustrates a current flow in the main circuit unit 10C during the period of a mode 3' in Fig. 16, and Fig. 18(B) illustrates a current flow in the main circuit unit 10C during the period of a mode 4' in Fig. 16.

As illustrated in Fig. 16, the drive waveforms of the switching elements Q1 and Q2 of the first leg and the drive waveforms of the switching elements Q3 and Q4 of the second leg are in the same phase (phase difference is 0), and are common except for the drive waveform and the cycle To during the frequency modulation control of the first embodiment illustrated in Fig. 5. The drive waveforms of the switching elements Q5 and Q6 of the third leg and the drive waveforms of the switching elements Q7 and Q8 of the fourth leg are in the same phase (phase difference is zero), but the timing (turn-on timing) at which the signal changes from Low to High is delayed by a phase difference θ' relative to the drive waveforms of the switching elements Q1 to Q4.

The control unit 20C at the time of the frequency PWM conversion control calculates the phase difference θ' using the driving frequency f similarly to the phase shift amount θ of the first embodiment, thereby controlling the pulse widths of the drive waveforms (PWM signals) of the switching elements Q5 to Q8. The driving frequency f is determined by the process similar to step S4 in Fig. 3. The phase difference θ' is, for example, a value obtained by multiplying a difference between the driving frequency f and the first frequency (frequency at which the frequency PWM conversion control is started) by a predetermined first gain (however, the value is different from the first gain Kθ). Since the phase difference θ' uniformly increases as the driving frequency f increases, the pulse width uniformly decreases as the driving frequency f increases. Therefore, the cycle Tθ' of the switching elements Q1 to Q4 is reduced more than the cycle To of Fig. 5. When the driving frequency f exceeds a predetermined maximum PWM driving frequency, the phase difference θ' may be fixed to a predetermined maximum phase difference.

During the period of the mode 1', as illustrated in Fig. 17(A), the battery voltage V1 is applied between the terminals T1 and T2, and the resonant current flows through the resonant coil Lr1 and the resonant capacitor Cr1 via the switching elements Q1 and Q4. As a result, on the rectification side, the load current flows between the terminals T3 and T4 via the switching elements Q5 and Q8. During the period of the next mode 2', since the voltage in the direction opposite to the mode 1' is applied to the resonant coil Lr1 in the primary-side switching circuit 11, the excitation current is rapidly attenuated and the current in the direction opposite to the mode 1' flows. However, in the secondary-side rectifier circuit 13C, since the switching elements Q5 to Q8 are turned off, no current flows to the load side as illustrated in Fig. 17(B).

During the period of the mode 3', as illustrated in Fig. 18(A), the battery voltage V1 is applied between the terminals T1 and T2, and the resonant current in a direction opposite to the mode 1' flows through the resonant coil Lr1 and the resonant capacitor Cr1 via the switching elements Q2 and Q3. As a result, on the rectification side, the load current flows between the terminals T3 and T4 via the switching elements Q6 and Q7. During the period of the next mode 4', since the voltage in the direction opposite to the mode 3' is applied to the resonant coil Lr1 in the primary-side switching circuit 11, the excitation current is rapidly attenuated and the current in the direction opposite to the mode 3' flows. However, in the secondary-side rectifier circuit 13C, since the switching elements Q5 to Q8 are turned off, no current flows to the load side as illustrated in Fig. 18(B).

As described above, when the driving frequency f exceeds the preset first frequency in an attempt to reduce the output, the single-phase current resonant DC/DC converter 1C performs the frequency PWM conversion control of controlling the pulse widths of the switching elements Q5 to Q8 by the phase difference θ' calculated using the driving frequency f. During the periods of the mode 2' and the mode 4' at the time of the frequency PWM conversion control, the load current is limited on the rectification side, and the main circuit unit 10C performs the output suppression operation (step-down operation).

Since the phase difference θ' of the frequency PWM conversion control is a control amount correlated with the driving frequency f, in the single-phase current resonant DC/DC converter 1C, it is not necessary to perform control by switching to another control mode, there is no need to take measures against a change in output due to the switching of control mode, and control can be performed only on the basis of frequency control. Therefore, with the single-phase current resonant DC/DC converter 1C, it is possible to cope with a wide range of output voltages without adding an element and a circuit and without complicating a software configuration for control.

Note that, in the case that the frequency boost conversion control is performed, in the mode 1B of the first embodiment, the switching element Q6 is turned on while the switching elements Q7 and Q8 are turned off, and the secondary-side rectifier circuit 13 is short-circuited by the conduction of the diode D8. And in the mode 3B of the first embodiment, the switching element Q5 is turned on while the switching elements Q7 and Q8 are turned off, and the secondary-side rectifier circuit 13 is short-circuited by the conduction of the diode D7 to perform the boost operation. On the other hand, in the third modification, since the diodes D7 and D8 are not provided in the secondary-side rectifier circuit 13C, for example, the switching element Q8 may be turned on in synchronization with the switching element Q1 in a period corresponding to the mode 1B of the first embodiment, and the switching element Q7 may be turned on in synchronization with the switching element Q3 in a period corresponding to the mode 3B of the first embodiment, to thereby cause a similar current flow to perform the boosting operation.

### [Another modification of single-phase current resonant DC/DC converter]

Although the embodiments of the single-phase current resonant DC/DC converter according to the present invention and the modifications thereof have been described above, the present invention is not limited to the embodiments and the modifications thereof.

For example, the single-phase current resonant DC/DC converter 1 according to the first embodiment performs both the frequency phase shift conversion control and the frequency boost conversion control, but may perform only one of the frequency phase shift conversion control and the frequency boost conversion control. The same applies to the single-phase current resonant DC/DC converters 1A and 1B according to the first modification and the second modification. Further, the single-phase current resonant DC/DC converter 1C according to the third modification performs both the frequency PWM conversion control and the frequency boost conversion control, but may perform only one of the frequency PWM conversion control and the frequency boost conversion control.

As the output suppression conversion control related to the output suppression operation (step-down operation), control other than the frequency phase shift conversion control and the frequency PWM conversion control may be performed as long as the control amount calculated using the driving frequency f is used. For example, frequency intermittent conversion control for causing the switching element to perform intermittent operation (burst operation) may be performed. In the case of the frequency intermittent conversion control, it is preferable that a standby period, in which the on/off operation of the switching elements do not perform, is used as a control amount, and the standby period is calculated using the driving frequency f and the predetermined gain.

Similarly, as the output increase conversion control related to the output increase operation (step-up operation), control other than the frequency boost conversion control may be performed as long as the control amount calculated using the driving frequency f is used.

Regarding the frequency phase shift conversion control in the embodiment, the drive side circuit (the primary-side switching circuit 11 during the discharge operation) is phase-shift driven, but it is not limited to this method as long as the phase shift control is performed by the control amount calculated using the driving frequency f. In addition, regarding the frequency boost conversion control, the boost operation is performed by short-circuiting the secondary-side rectifier circuit in the embodiment, but it is not limited to this method as long as the frequency boost conversion control is performed by the control amount calculated using the driving frequency f. For example, a boosting circuit may be separately added to the primary-side or secondary-side circuit, and the added boosting circuit may perform the short-circuit operation. Further, regarding the frequency PWM conversion control, the PWM control is performed by the secondary-side rectifier circuit 13C in the third modification, but the resonant current period may be controlled by performing PWM control on the primary-side switching circuit 11.

Regarding the configuration of the main circuit of the present invention, the example of the LLC method or the CLLC method in which the legs have a two-parallel full-bridge configuration has been described in the embodiment and modification, but the present invention is not limited thereto. And the configuration can be appropriately changed as long as the output suppression operation (step-down operation) or the output increase operation (step-up operation) is performed by the control amount calculated using the driving frequency f. In the first modification, although the third leg is a switching element and the fourth leg is a diode, the fourth leg may be a switching element and the third leg may be a diode. And in the second modification, although the lower arms of the third leg and the fourth leg are switching elements and the upper arms of the third leg and the fourth leg are diodes, the upper arms of the third leg and the fourth leg may be switching elements and the lower arms of the third leg and the fourth leg may be diodes. In addition, an LLC or CLLC method having a one-row half-bridge configuration, a three-phase LLC method or a three-phase CLLC method in which three legs are arranged in parallel, and a multi-phase LLC method or a multi-phase CLLC method in which four or more legs are arranged in parallel may be used.

In the case of the CLLC method having the half-bridge configuration, for example, the frequency PWM conversion control can be performed on the switching elements on the drive side using the pulse width of the PWM signal in an ON period (period in which the resonant current flows) as the control amount, and the frequency boost conversion control can be performed on the switching elements on the rectification side using the ON period (short circuit time in a period in which the load current flows) of a drive signal, that is, the boost amount as the control amount. Each control amount is calculated using the driving frequency f.

In the case of the three-phase CLLC method, for example, the frequency PWM conversion control can be performed using the pulse width of the ON period of the PWM signal (period in which the resonant current of each phase shifted by 120° flows) as the control amount or the frequency phase shift conversion control can be performed using the phase difference (phase shift amount) of the other two phase legs relative to the one phase leg as the control amount on the switching element on the drive side, and the frequency boost conversion control can be performed using the ON period of the drive signal (short circuit time during the period in which the load current of each phase flows), that is, the boost amount as the control amount on the switching elements on the rectification side. Each control amount is calculated using the driving frequency f.

In the case of the multiphase CLLC method, the frequency PWM conversion control can be performed on the switching element on the drive side using the pulse width of the PWM signal in the ON period (period in which the resonant current of each phase flows) as the control amount, and the frequency boost conversion control can be performed on the switching element on the rectification side using the ON period (short circuit time during the period in which the load current of each phase flows) of the drive signal, that is, the boost amount as the control amount. Each control amount is calculated using the driving frequency f.

### [Embodiment of three-phase current resonant DC/DC converter (second embodiment)]

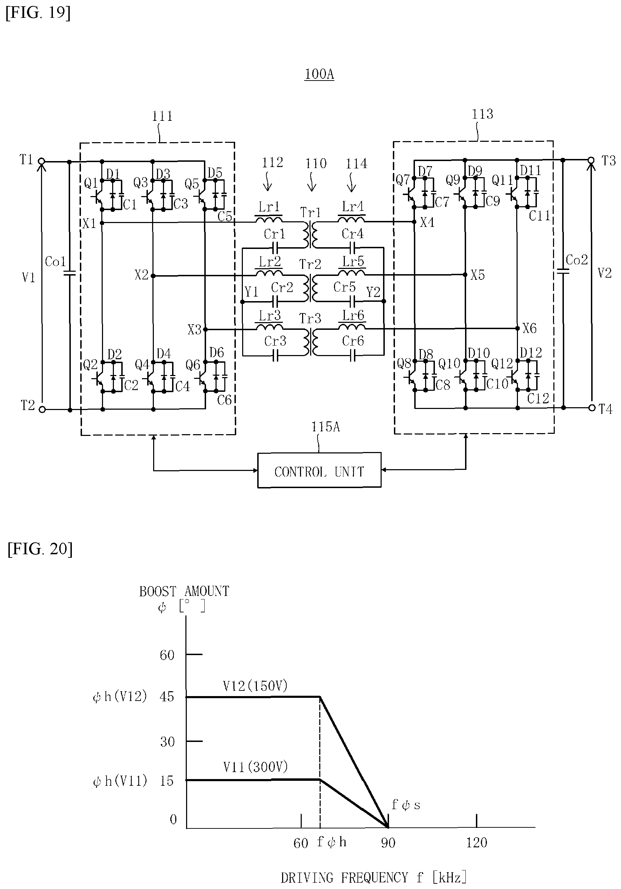

Fig. 19 illustrates a three-phase current resonant DC/DC converter 100A (hereinafter, the DC/DC converter 100A) according to a second embodiment of the present invention. The DC/DC converter 100A is a CLLC three-phase current resonant DC/DC converter, and performs forward power transmission from a primary-side circuit to a secondary-side circuit and backward power transmission from the secondary-side circuit to the primary-side circuit.

The DC/DC converter 100A includes terminals T1 to T4, a DC side terminal of a bidirectional inverter for converting an AC voltage into a DC voltage is connected to the terminals T3 and T4, and a load (for example, a battery of an electric vehicle) is connected to the terminals T1 and T2. For example, in the case of the forward power transmission from the terminals T1 and T2 to the terminals T3 and T4, the DC voltage V1 is input to the terminals T1 and T2, and the DC voltage V2 and the DC current to be supplied to the load are output from the terminals T3 and T4. When the battery of the electric vehicle is connected to the terminals T1 and T2, the voltage range of V1 changes from 150 V to 450 V. Further, when the terminals T3 and T4 are bus voltages, V2 is a constant voltage of about 380 V. Therefore, when the voltage of V1 decreases, the input/output voltage ratio increases, so that the driving frequency of a primary-side switching circuit 111 redeuces to increase the voltage gain (step-up ratio) of the LLC method.

The DC/DC converter 100A includes a transformer unit 110, a primary-side circuit including a primary-side switching circuit 111, a primary-side resonant circuit 112, and a capacitor Co1, a secondary-side circuit including a secondary-side switching circuit 113, a secondary-side resonant circuit 114, and a capacitor Co2, a control unit 115A, drive circuits (not illustrated) of the primary-side switching circuit 111 and the secondary-side switching circuit 113, and a detection circuit (not illustrated). The detection circuit detects a voltage value, a current value, and the like necessary for control of the control unit 115A, and includes, for example, various sensors and an AD converter.

The transformer unit 110 (corresponding to the "transformer unit" of the present invention) is constituted by a high-frequency isolation transformer, and includes a first-phase transformer circuit Tr1, a second-phase transformer circuit Tr2, and a third-phase transformer circuit Tr3, and the transformer circuit of each phase has a primary-side coil (winding) and a secondary-side coil (winding). The primary-side coils of the transformer circuits Tr1 to Tr3 are connected to the primary-side switching circuit 111 via the primary-side resonant circuit 112, and the secondary-side coils of the transformer circuits Tr1 to Tr3 are connected to the secondary-side switching circuit 113 via the secondary-side resonant circuit 114. The transformer circuits Tr1 to Tr3 of the respective phases may be constituted by one or more transformers, or the transformer unit 110 may be constituted by one three-phase transformer having three phases or a plurality of transformers having a plurality of phases. Note that each excitation coil on the primary side of the transformer circuits Tr1 to Tr3 is included in the primary-side coil of each transformer circuit, and each excitation coil on the secondary side of the transformer circuits Tr1 to Tr3 is included in the secondary-side coil of each transformer circuit, and the illustration of the excitation coil is omitted.

The primary-side switching circuit 111 includes a first leg of a first phase, a second leg of a second phase, and a third leg of a third phase connected in parallel, and each leg includes an upper arm and a lower arm connected in series. The upper arm of the first leg includes a switching element Q1, a diode D1, and a capacitor C1.
Similarly, the lower arm of the first leg includes a switching element Q2, a diode D2, and a capacitor C2, the upper arm of the second leg includes a switching element Q3, a diode D3, and a capacitor C3, the lower arm of the second leg includes a switching element Q4, a diode D4, and a capacitor C4, the upper arm of the third leg includes a switching element Q5, a diode D5, and a capacitor C5, and the lower arm of the third leg includes a switching element Q6, a diode D6, and a capacitor C6. The diodes D1 to D6 are reverse connected diodes for reflux during the forward power transmission or rectification during the backward power transmission, and the capacitors C1 to C6 are partial resonant capacitors for soft switching.

As the switching element Q1, for example, a power semiconductor switching element capable of switching at a high frequency, such as an insulated gate bipolar transistor (IGBT) and a metal oxide semiconductor field effect transistor (MOSFET) using silicon carbide (SiC) or gallium nitride (GaN), can be used. The same applies to the switching elements Q2 to Q6 and the switching elements Q7 to Q12 to be described later.

The diode D1 is connected in parallel in the reverse direction to the current path of the switching element Q1. The diode D1 may be a parasitic diode of the switching element Q1, an external diode independent of the switching element Q1, or both. The same applies to the diodes D2 to D6 and diodes D7 to D12 described later.

The capacitor C1 is connected in parallel to the current path of the switching element Q1 and the diode D1. The capacitor C1 may be a parasitic capacitor of the switching element Q1, an external capacitor independent of the switching element Q1, or both. The same applies to the capacitors C2 to C6 and capacitors C7 to C12 described later.

The primary-side resonant circuit 112 includes a first resonant circuit including a resonant coil Lr1 and a resonant capacitor Cr1, a second resonant circuit including a resonant coil Lr2 and a resonant capacitor Cr2, and a third resonant circuit including a resonant coil Lr3 and a resonant capacitor Cr3. One end of the resonant coil Lr1 is connected to a connection point X1 of the switching elements Q1 and Q2 of the first leg, and the other end is connected to one end of the resonant capacitor Cr1 via the primary-side coil of the transformer circuit Tr1. One end of the resonant coil Lr2 is connected to a connection point X2 of the switching elements Q3 and Q4 of the second leg, and the other end is connected to one end of the resonant capacitor Cr2 via the primary-side coil of the transformer circuit Tr2. One end of the resonant coil Lr3 is connected to a connection point X3 of the switching elements Q5 and Q6 of the third leg, and the other end is connected to one end of the resonant capacitor Cr3 via the primary-side coil of the transformer circuit Tr3. The other ends of the resonant capacitors Cr1 to Cr3 are connected to each other to constitute a neutral point Y1. Note that the "resonant coil" of the present invention may be a coil independent of the "transformer unit" of the present invention, may be configured by a leakage inductance included in the transformer unit, or may be both. That is, the resonant coil Lr1 may use the primary-side leakage inductance of the transformer circuit Tr1 of the transformer unit 110, may be a reactor different from the transformer circuit Tr1, or may be a combination of both. The same applies to the resonant coils Lr2 and Lr3.

The positions of the resonant coil Lr1 and the resonant capacitor Cr1 may be switched, or both the resonant coil Lr1 and the resonant capacitor Cr1 may be disposed on either end of the primary-side coil of the transformer circuit Tr1. The same applies to the resonant coil Lr2 and the resonant capacitor Cr2, and the resonant coil Lr3 and the resonant capacitor Cr3. Note that, although the primary side of the transformer unit 110 is in the Y connection, the Δ connection may be adopted as long as the equilibrium connection is adopted, and the Y connection is adopted as long as the secondary side is adopted, but the Δ connection may be adopted.

The capacitor Co1 is a capacitor for removing an output ripple during the backward power transmission that also serves to remove an input voltage ripple during the forward power transmission, and is connected between the terminals T1 and T2.

The secondary-side switching circuit 113 has the same configuration as the primary-side switching circuit 111, includes a fourth leg of a first phase, a fifth leg of a second phase, and a sixth leg of a third phase connected in parallel, and each leg includes an upper arm and a lower arm connected in series. The upper arms of the respective legs include switching elements Q7, Q9, and Q11, diodes D7, D9, and D11, and capacitors C7, C9, and C11. Similarly, the lower arms of the respective legs include switching elements Q8, Q10, and Q12, diodes D8, D10, and D12, and capacitors C8, C10, and C12. The diodes D7 to D12 are reverse connected diodes for reflux during the backward power transmission or rectification during the forward power transmission, and the capacitors C7 to C12 are partial resonant capacitors for soft switching.

The secondary-side resonant circuit 114 has the same configuration as the primary-side resonant circuit 112, and includes a fourth resonant circuit including a resonant coil Lr4 and a resonant capacitor Cr4, a fifth resonant circuit including a resonant coil Lr5 and a resonant capacitor Cr5, and a sixth resonant circuit including a resonant coil Lr6 and a resonant capacitor Cr6. One end of the resonant coil Lr4 is connected to a connection point X4 of the switching elements Q7 and Q8 of the fourth leg, and the other end is connected to one end of the resonant capacitor Cr4 via the secondary-side coil of the transformer circuit Tr1. One end of the resonant coil Lr5 is connected to a connection point X5 of the switching elements Q9 and Q10 of the fifth leg, and the other end is connected to one end of the resonant capacitor Cr5 via the secondary-side coil of the transformer circuit Tr2. One end of the resonant coil Lr6 is connected to a connection point X6 of the switching elements Q11 and Q12 of the sixth leg, and the other end is connected to one end of the resonant capacitor Cr6 via the secondary-side coil of the transformer circuit Tr3. The other ends of the resonant capacitors Cr4 to Cr6 are connected to each other to constitute a neutral point Y2. Note that the resonant coil Lr4 may use the secondary-side leakage inductance of the transformer circuit Tr1, may be a reactor different from the transformer circuit Tr1, or may be a combination of both. The same applies to the resonant coils Lr5 and Lr6.

The capacitor Co2 is a capacitor for removing an output ripple during the forward power transmission that also serves to remove an input voltage ripple during the backward power transmission, and is connected between the terminals T3 and T4.

The control unit 115A includes a processing unit that performs various types of control for turning on/off the switching elements Q1 to Q12, and a storage unit including a memory or the like. The control unit 115A may include a digital circuit using a microcontroller, a DSP, or the like, an analog circuit, or a circuit in which the digital circuit and the analog circuit are combined.

When the driving frequency of the switching elements Q1 to Q6 of the primary-side switching circuit 111 is higher than a preset frequency (corresponding to the "first frequency" of the present invention), the control unit 115A during the forward power transmission performs the frequency modulation control on the primary-side switching circuit 111 and performs the diode rectification control or the synchronous rectification control on the secondary-side switching circuit 113. When the driving frequency of the primary-side switching circuit 111 is equal to or lower than the first frequency, the control unit 115A performs boost control (in the present embodiment, it is referred to as "frequency boost conversion control").

Note that the first frequency is a driving frequency that is a threshold for starting frequency boost conversion control when the input voltage V1 of the primary-side switching circuit 111 is low (input/output voltage ratio is high) and the target output voltage cannot be reached within a range of a driving frequency that is normally used even if the frequency modulation control for reducing the driving frequency is performed. Here, the range of the driving frequency to be normally used is a frequency range larger than the resonance frequency determined by the inductances of the excitation coils on the primary side of the transformer circuits Tr1 to Tr3 and the resonant coils Lr1 to Lr3 and capacitances of the resonant capacitors Cr1 to Cr3.

The frequency boost conversion control is control in which a boost amount, which is a control amount, is calculated on the basis of the driving frequency of the switching elements Q1 to Q6 on the drive side at the time of the forward power transmission, boost control is started in accordance with the on-timing of the switching elements Q1 to Q6 of the primary-side switching circuit 111 within the period in which the resonant current flows through the primary-side resonant circuit 112, and the secondary-side switching circuit 113 is short-circuited only for the boost period corresponding to the boost amount. In the frequency boost conversion control, a large resonant current flows through the primary-side resonant circuit 112 to store large energy in the resonant coils Lr1 to Lr3 in the boost period, and the energy is released as the load current to the secondary-side switching circuit 113, whereby a high output voltage V2 can be obtained even when the input voltage V1 is low.

When the driving frequency of the switching elements Q7 to Q12 of the secondary-side switching circuit 113 is higher than a preset frequency (corresponding to the "second frequency" of the present invention), the control unit 115A at the time of the backward power transmission performs the frequency modulation control on the secondary-side switching circuit 113 and performs the diode rectification control or the synchronous rectification control on the primary-side switching circuit 111. On the other hand, when the driving frequency of the secondary-side switching circuit 113 is equal to or lower than the second frequency, the control unit 115A performs boost control (in the present embodiment, it is referred to as "frequency boost conversion control").

In the frequency boost conversion control during the backward power transmission, similarly to the forward power transmission, the boost amount that is the control amount is calculated on the basis of the driving frequency of the switching elements Q7 to Q12 on the drive side during the backward power transmission, and during the period in which the resonant current flows to the secondary-side resonant circuit 114, control is performed so that the primary-side switching circuit 111 is short-circuited only for the boost period corresponding to the boost amount in accordance with the on timing of the switching elements Q7 to Q12 of the secondary-side switching circuit 113.

Note that the second frequency is a driving frequency that is a threshold for starting the frequency boost conversion control when the output voltage V1 of the primary-side switching circuit 111 is high (the input/output voltage ratio is high) and the target output voltage cannot be reached in the range of the driving frequency that is normally used even if the frequency modulation control for reducing the driving frequency is performed.

In the DC/DC converter 100A, since the circuit configuration of the primary-side circuit and the circuit configuration of the secondary-side circuit are symmetric with the transformer unit 110 interposed therebetween, control performed on the primary-side switching circuit 111 during the forward power transmission is executed on the secondary-side switching circuit 113 during the backward power transmission by the control unit 115A. And the control performed on the secondary-side switching circuit 113 during the forward power transmission is executed on the primary-side switching circuit 111 during the backward power transmission. Since the specific control content is common between the forward power transmission and the backward power transmission, only the forward power transmission will be described below.

Fig. 20 illustrates a relationship between the driving frequency f [kHz] of the primary-side switching circuit 111 and the boost amount ψ [°] that is the control amount of the frequency boost conversion control during the forward power transmission. Fig. 20 illustrates the boost amount ψ when the input voltage V1 is V11 (for example, V11 = 300 [V]) and the boost amount ψ when the input voltage V1 is V12 (for example, V12 = 150 [V]). The boost amount ψ is a value expressing a period by [°] in which any of the switching elements Q7 to Q12 of the secondary-side switching circuit 113 is turned on to short-circuit the secondary-side switching circuit 113 within a period in which the resonant current flows through the primary-side resonant circuit 112 when the cycle T of the driving frequency f is set to 360°. The boost amount ψ is a larger value when the input voltage V1 is V12, which is low, because a larger step-up ratio is necessary, and is a smaller value when the input voltage V1 is V11, which is high, because a smaller step-up ratio is necessary.

When the driving frequency f is higher than the boost start driving frequency fψs [kHz] corresponding to the first frequency, the control unit 115A performs the frequency modulation control on the primary-side switching circuit 111. When the input voltage V1 is less than the predetermined threshold (V1th [V]) and the driving frequency f is equal to or lower than the boost start driving frequency fψs, the output value (for example, the output voltage V2) does not increase to a target value (for example, a target voltage value) if the driving frequency f is reduced only by the frequency modulation control, and thus the control unit 115A performs the frequency boost conversion control. The boost start driving frequency fψs can be calculated on the basis of the winding ratio of the transformer unit 110, the input voltage V1 and the output voltage V2, and resonance constants of the resonant coils Lr1 to Lr3 and the resonant capacitors Cr1 to Cr3. In Fig. 20, fψs = 90 [kHz] is set. Note that, when the input voltage V1 is equal to or higher than V1th, the output value can be stepped-up to the target value only by the frequency modulation control even if the input voltage V1 is low (for example, even if V1 = V1th) due to the transformation ratio of the transformer unit 110, and thus the driving frequency f does not become equal to or lower than the boost start driving frequency fψs. Thus, when input voltage V1 is equal to or more than V1th, the control unit 115A performs the frequency modulation control on primary-side switching circuit 111.

When the driving frequency f is higher than the maximum boost driving frequency fψh (in Fig. 20, fψh = 67 [kHz]), the boost amount ψ increases according to the decrease of the driving frequency f. When the driving frequency f is equal to or lower than the maximum boost driving frequency fψh, the boost amount ψ when the input voltage V1 is V11 (300 [V]) is fixed (clamped) to the maximum boost amount ψh(V11), and the boost amount ψ when the input voltage V1 is V12 (150 [V]) is fixed (clamped) to the maximum boost amount ψh(V12). In Fig. 20, ψh(V11) = 15° and ψh(V12) = 45°.

Note that the maximum boost amount ψh(V1x) is provided to prevent control from becoming unstable due to excessive stepping-up caused by an excessively large boost amount ψ because large energy is accumulated in the resonant coils Lr1 to Lr3 in a very short time when control for short-circuiting the secondary-side switching circuit 113 is performed by boost control. As described above, by changing the boost amount ψ according to the voltage value of the input voltage V1, the optimum step-up ratio can be obtained even if the input voltage V1 is low, and the output voltage range can be appropriately expanded.

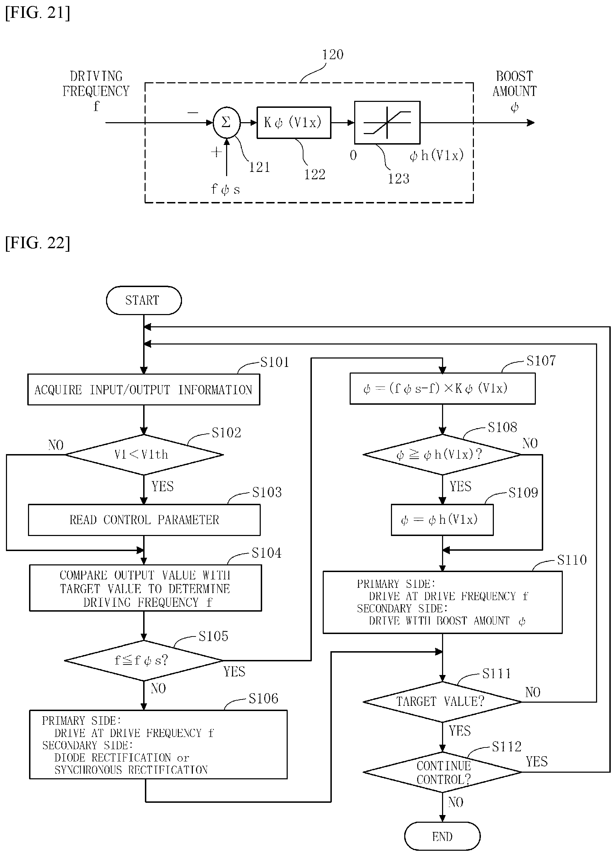

Fig. 21 illustrates a frequency boost conversion control block 120 included in the control unit 115A. The frequency boost conversion control block 120 includes a first addition unit 121, a first multiplication unit 122, and a first clamp unit 123.

The first addition unit 121 compares the driving frequency f with the boost start driving frequency fψs when the input voltage V1 is lower than the first input voltage (threshold V1th), and outputs a difference (fψs - f) between the driving frequency f and the boost start driving frequency fψs to the first multiplication unit 122 when the driving frequency f is equal to or lower than the boost start driving frequency fψs.

The first multiplication unit 122 calculates the boost amount ψ by multiplying the difference (fψs - f) by a frequency boost conversion gain Kψ(V1x), and outputs the boost amount ψ to the first clamp unit 123. The frequency boost conversion gain Kψ(V1x) is a value determined by the input voltage V1 (in Fig. 20, V1 = V11 or V12) at that time. Note that the frequency boost conversion gain Kψ(V1x) is preferably set to a larger value because it is necessary to obtain a higher step-up ratio (large boost amount ψ) as the input voltage V1 is low (the input/output voltage ratio is high). In the example of Fig. 20, Kψ(V11) < Kψ(V12) is satisfied.

The first clamp unit 123 outputs the boost amount ψ (ψ = (fψs - f) × Kψ(V1x) ≤ ψh(V1x)) with the lower limit of the boost amount ψ as 0° and the upper limit as the maximum boost amount ψh(V1x). The maximum boost amount ψh(V1x) is a value determined by the input voltage V1 (in Fig. 20, ψh(V1x) = ψh(V11) or ψh(V12)) at that time. Note that the maximum boost amount ψh(V1x) is preferably set to a larger value because it is necessary to obtain a higher step-up ratio (large boost amount ψ) when the input voltage V1 is low (the input/output voltage ratio is high). In the example of Fig. 20, ψh(V11) < ψh(V12) is satisfied.

The control unit 115A performs the frequency boost conversion control on the basis of the boost amount ψ output from the first clamp unit 123. When the control unit 115A increases the output, the control unit 115A controls the driving frequency f to decrease since the driving frequency f is the control amount. Therefore, the difference (fψs - f) output from the first addition unit 121 increases. Until the boost amount ψ reaches the maximum boost amount ψh(V1x), the boost amount ψ uniformly increases with the decrease in the driving frequency f, so that the output of the DC/DC converter 100A increases. Note that, in Figs. 20 and 21, the frequency boost conversion gain Kψ(V1x) and the maximum boost amount ψh(V1x) are varied by the input voltage V1, but the boost start driving frequency fψs may be further varied by the input voltage V1. For example, when the input voltage V1 is low, the boost start driving frequency fψs may be set higher, and the frequency boost conversion control may be started from the higher driving frequency f. In the example of Fig. 20, fψs(V11) < fψs(V12) is satisfied. In this manner, a high boost amount ψ can be obtained without using excessively high frequency boost conversion gain Kψ(V1x), and more stable boost control can be performed.

Note that, the output voltage V2 of the secondary-side switching circuit 113 is constant, and the frequency boost conversion gain Kψ(V1x), the maximum boost amount ψh(V1x), and the boost start driving frequency fψs are varied by a change in the input voltage V1. However, when the input voltage V1 does not change and the output voltage V2 changes, the above described value may be varied by a change in the output voltage V2. When both or one of the input voltage V1 and the output voltage V2 changes, the above described value may be varied by a value of the input voltage ratio V2/V1.

Fig. 22 illustrates an example of a flowchart of control processing executed by the control unit 115A during the forward power transmission.

After started the control processing, the control unit 115A first starts the frequency modulation control. The control unit 115A acquires input/output information (for example, the input voltage V1, the input current input to the terminal T1, the output voltage V2, and the output current output from the terminal T3) of the DC/DC converter 100A from the detection circuit (S101).

The control unit 115A that has acquired the input/output information compares the input voltage V1 with the predetermined threshold V1th [V] , and determines whether the input voltage V1 is lower than the threshold V1th (S102). When the input voltage V1 is lower than the threshold V1th (YES in S102), the control unit 115A reads the control parameters stored in the storage unit (S103), and proceeds to step S104. The control parameters include the boost start driving frequency fψs, the frequency boost conversion gain Kψ(V1x), the maximum boost amount ψh(V1x), and the like, which are control parameters of the frequency boost conversion control. Note that fixed parameters among the control parameters may be read only once at the time of activation. When the input voltage V1 is equal to or higher than the threshold V1th (NO in S102), the control unit 115A proceeds to step S104. Note that step S102 is not necessarily required because it is provided for speeding up the processing.

After proceeding to step S104, the control unit 115A compares the output value (for example, the output power value) of the DC/DC converter 100A with the target value (for example, the target power value), and determines the driving frequency f of the switching elements Q1 to Q6 on the basis of a difference between both. The control unit 115A reduces the driving frequency f when the output value is smaller than the target value, and increases the driving frequency f when the output value is larger than the target value. The target value may be, for example, a value preset by the control unit 115A, a value determined from input/output conditions of the DC/DC converter 100A, or a value input from an external device. The target value may change from moment to moment.

Next, the control unit 115A compares the driving frequency f determined in step S104 with the boost start driving frequency fψs, and determines whether he driving frequency f is equal to or lower than the boost start driving frequency fψs (S105). When the driving frequency f is higher than the boost start driving frequency fψs (NO in S105), the control unit 115A sets the driving frequency f to the value determined in step S104, drives the switching elements Q1 to Q6 at the driving frequency f, performs the diode rectification control or the synchronous rectification control on the secondary-side switching circuit 113 (S106), and proceeds to step S111.

When the driving frequency f is equal to or lower than the boost start driving frequency fψs (YES in S105), the control unit 115A calculates the boost amount ψ by multiplying the difference (fψs - f) between the driving frequency f and the boost start driving frequency fψs by the frequency boost conversion gain Kψ(V1x) (S107). The processing in step S107 is performed by the first addition unit 121 and the first multiplication unit 122.

After calculated the boost amount ψ, the control unit 115A compares the boost amount ψ with the maximum boost amount ψh(V1x) to determine whether the boost amount ψ is equal to or larger than the maximum boost amount ψh(V1x) (S108). When the boost amount ψ is equal to or larger than the maximum boost amount ψh(V1x) (YES in S108), the control unit 115A sets the boost amount ψ to the maximum boost amount ψh(V1x) (S109) and proceeds to step S110. On the other hand, when the boost amount ψ is smaller than the maximum boost amount ψh(V1x) (NO in S108), the boost amount ψ is set to the value calculated in step S107, and the processing proceeds to step S110.

After proceeded to step S110, the control unit 115A sets the driving frequency f to the value determined in step S104, drives the switching elements Q1 to Q6 at the driving frequency f, and performs the frequency boost conversion control on the basis of the set boost amount ψ (S110).

Next, the control unit 115A determines whether the output value has reached the target value (S111). When the output value has not reached the target value (NO in S111), the control unit 115A repeats the processing in and after step S101, and when the output value has reached the target value (YES in S111), the processing proceeds to step S112. In step S112, the control unit 115A determines whether to continue the control processing. The control unit 115A makes the determination in step S112 on the basis of, for example, whether a termination command has been received from an external device. For example, the control unit 115A determines to continue the control processing when the termination command has not been received (YES in S112), and repeats the processing in and after step S101, and determines not to continue the control processing when the termination command has been received (NO in S112), and ends the control processing.

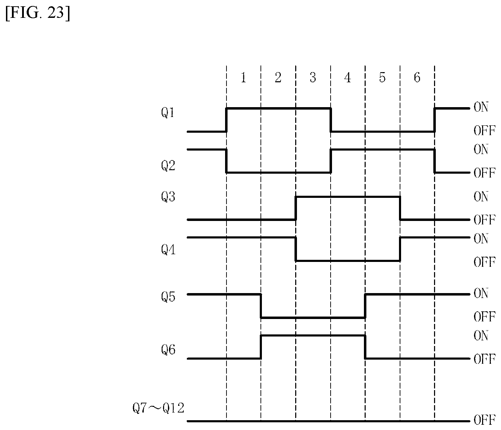

Fig. 23 illustrates a control timing of the DC/DC converter 100A when the driving frequency f is higher than the boost start driving frequency fψs. In Fig. 23, the control unit 115A performs the frequency modulation control on the switching elements Q1 to Q6, and performs the diode rectification control on the switching elements Q7 to Q12. Reference signs 1 to 6 in the drawing represents modes of the control timing, and modes 1 to 6 are repeated during the control. Note that, in Fig. 23, the description of the dead time is omitted, and the description of the dead time is also omitted to the subsequent drawings.

Specifically, the control unit 115A during the frequency modulation control alternately turns on and off the switching elements Q1 and Q2 with a phase difference of 180° by providing a predetermined dead time, alternately turns on and off the switching elements Q3 and Q4 with a phase difference of 180° by providing a predetermined dead time, and alternately turns on and off the switching elements Q5 and Q6 with a phase difference of 180° by providing a predetermined dead time. The duty of the switching elements Q1 to Q6 is set to, for example, 50%. Note that, strictly speaking, the on-duty of the switching elements Q1 to Q6 decreases from 50% by the dead time. Furthermore, the control unit 115A brings the output value (for example, the output power value) of the DC/DC converter 100A close to a predetermined target value (for example, the target power value) by setting respective driving frequencies of the switching elements Q1 to Q6 to the same driving frequency f and simultaneously changing the same driving frequency f to the same extent in a state where the phase difference between the first leg and the second leg is fixed to 120°, the phase difference between the second leg and the third leg is fixed to 120°, and the phase difference between the third leg and the first leg is fixed to 120°. The control unit 115A reduces the driving frequency f when the output value is smaller than the target value, and increases the driving frequency f when the output value is larger than the target value.

The control unit 115A at the time of the diode rectification control brings the switching elements Q7 to Q12 into a continuous off state. Thus, the secondary-side switching circuit 113 becomes a diode bridge circuit of the diodes D7 to D12, and diode rectification is performed by the diode bridge circuit.

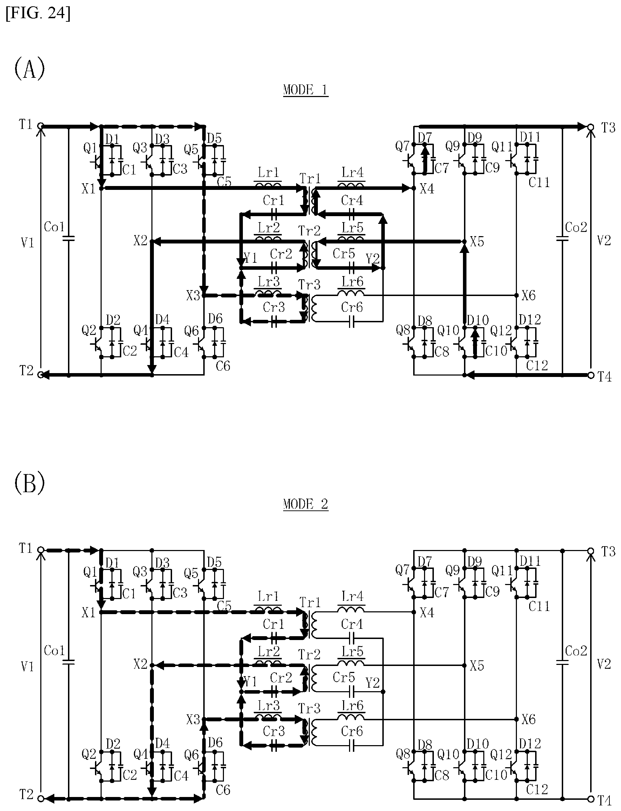

Figs. 24 to 26 illustrate main current path diagrams during the periods of the modes 1 to 6 of Fig. 23. In Figs. 24 to 26, a solid line indicates the resonant current flowing through the primary-side circuit and the load current flowing through the secondary-side circuit, a broken line indicates the excitation current flowing through the primary-side circuit, and the same applies to the subsequent drawings. Note that, in Figs. 24 to 26, the description of the current (current during transition) during turn-on and turn-off of the switching elements Q1 to Q6 is omitted, and the description of the current during transition is also omitted to the subsequent drawings.

As illustrated in Fig. 24(A), during the period of the mode 1, when the switching element Q1 is turned on, the resonant current flows through the first resonant circuit including the resonant coil Lr1 and the resonant capacitor Cr1 and the second resonant circuit including the resonant coil Lr2 and the resonant capacitor Cr2, and the load current flows through the secondary-side circuit via the transformer circuits Tr1 and Tr2. Since only the excitation current flows through the third resonant circuit including the resonant coil Lr3 and the resonant capacitor Cr3, no load current flows through the secondary-side coil of the transformer circuit Tr3.

Fig. 24(B) illustrates a second half period of the mode 2. During the second half period of the mode 2, only the excitation current flows in the primary-side circuit (the resonant current flowing in the period of the mode 1 converges), and thus the load current does not flow in the secondary-side circuit. Note that the resonance period during which the resonant current flows varies according to the driving frequency f, input/output conditions of the DC/DC converter 100A, and load conditions.

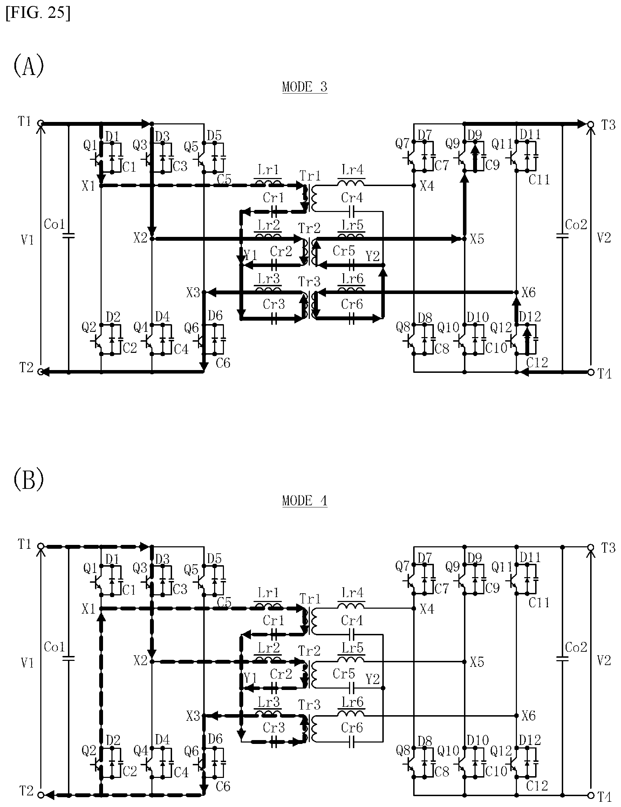

As illustrated in Fig. 25(A), during the period of the mode 3, when the switching element Q3 is turned on, the resonant current flows through the second resonant circuit and the third resonant circuit, and the load current flows through the secondary-side circuit via the transformer circuits Tr2 and Tr3. Since only the excitation current flows through the first resonant circuit, no load current flows through the secondary-side coil of the transformer circuit Tr1.

Fig. 25(B) illustrates a second half period of the mode 4. During the second half period of the mode 4, only the excitation current flows in the primary-side circuit (the resonant current flowing in the period of the mode 3 converges), and thus the load current does not flow in the secondary-side circuit.

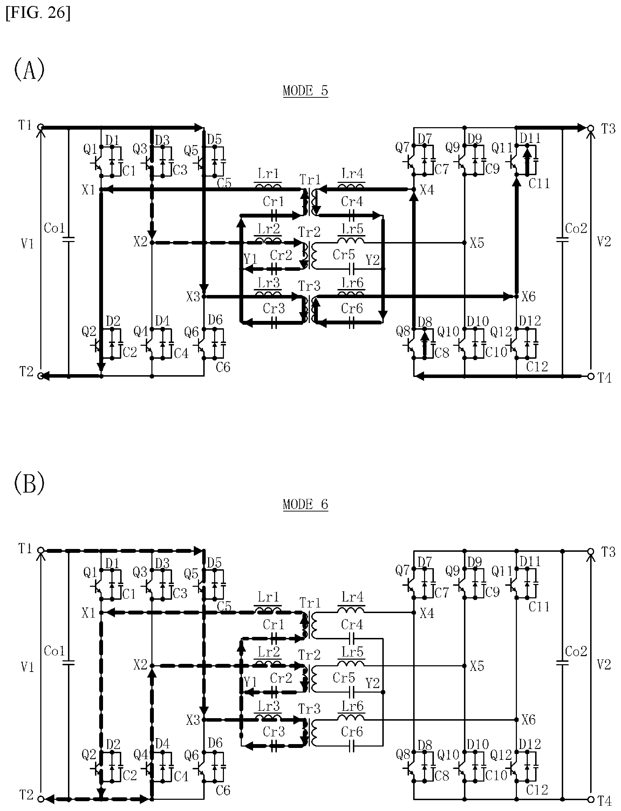

As illustrated in Fig. 26(A), during the period of the mode 5, when the switching element Q5 is turned on, the resonant current flows through the third resonant circuit and the first resonant circuit, and the load current flows through the secondary-side circuit via the transformer circuits Tr3 and Tr1. Since only the excitation current flows through the second resonant circuit, no load current flows through the secondary-side coil of the transformer circuit Tr2.

Fig. 26(B) illustrates a second half period of the mode 6. During the second half period of the mode 6, only the excitation current flows in the primary-side circuit (the resonant current flowing in the period of the mode 5 converges), and thus the load current does not flow in the secondary-side circuit.

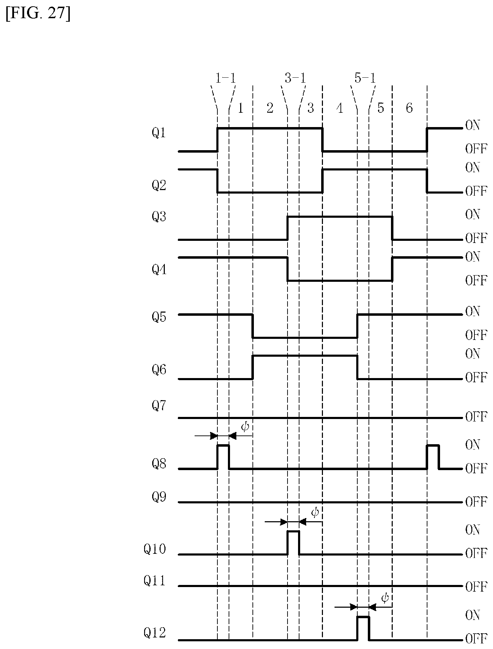

Fig. 27 illustrates a control timing of the DC/DC converter 100A when the driving frequency f is equal to or lower than the boost start driving frequency fψs. In Fig. 27, the control unit 115A performs the diode rectification control and the frequency boost conversion control. A difference from Fig. 23 is that there is a boost period ψ of a mode 1-1, a mode 3-1, and a mode 5-1. The boost period ψ is a period corresponding to the boost amount ψ.

At the time of the diode rectification control and the frequency boost conversion control, the control unit 115A turns on the switching element Q8 of the fourth leg to generate the boost period ψ of the mode 1-1 at a timing when the resonance period in which the resonant current flows in the first resonant circuit and the second resonant circuit starts (on timing of the switching element Q1), turns on the switching element Q10 of the fifth leg to generate the boost period ψ of the mode 3-1 at a timing when the resonance period in which the resonant current flows in the second resonant circuit and the third resonant circuit starts (on timing of the switching element Q3), and turns on the switching element Q12 of the sixth leg to generate the boost period ψ of the mode 5-1 at a timing when the resonance period in which the resonant current flows in the third resonant circuit and the first resonant circuit starts (on timing of the switching element Q5).

At the time of the diode rectification control and the frequency boost conversion control, the control unit 115A turns off the switching element Q8 at the timing when the boost period ψ of the mode 1-1 ends, turns off the switching element Q10 at the timing when the boost period ψ of the mode 3-1 ends, and turns off the switching element Q12 at the timing when the boost period ψ of the mode 5-1 ends. The switching elements Q7, Q9, and Q11 are continuously turned off.

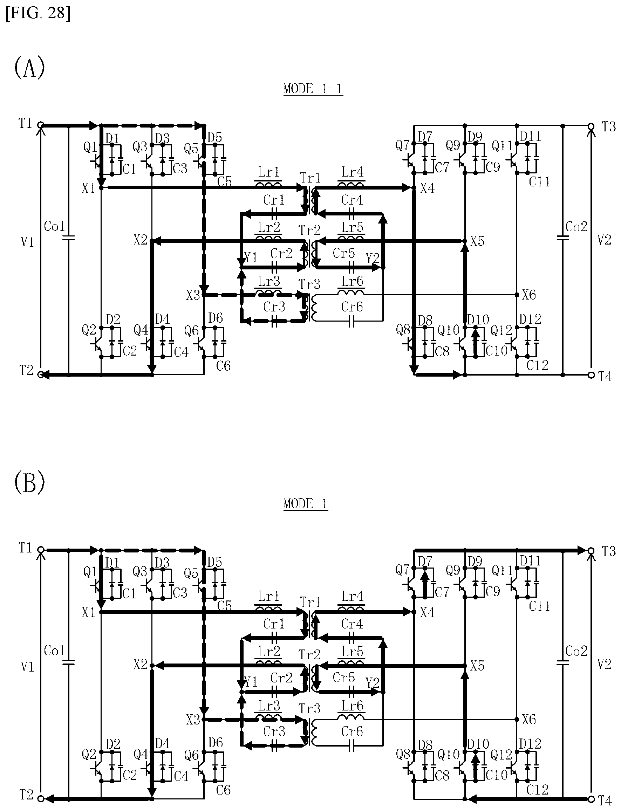

Figs. 28 to 30 illustrate current path diagrams during the periods of the modes 1-1, 1, 3-1, 3, 5-1, and 5 in Fig. 27. The current paths during the periods of the mode 2, the mode 4, and the mode 6 in Fig. 27 are the same as the current paths during the periods of the mode 2, the mode 4, and mode 6 in Fig. 23, and thus, are omitted.

As illustrated in Fig. 28(A), during the period of the mode 1-1, when the switching element Q1 is turned on, the resonant current flows through the first resonant circuit and the second resonant circuit, and the load current flows through the secondary-side circuit via the transformer circuits Tr1 and Tr2. In the secondary-side circuit, when the switching element Q8 is turned on, the secondary-side switching circuit 113 is short-circuited through the path between the switching element Q8 and the diode D10. Thus, in the first resonant circuit and the second resonant circuit, the resonant current larger than a normal resonant current flows, and large energy is accumulated in the resonant coils Lr1 and Lr2. As illustrated in Fig. 28(B), during the period of the mode 1, when the switching element Q8 is turned off, the energy accumulated during the period of the mode 1-1 is released, and the load current larger than a normal load current flows in the secondary-side circuit. As described above, in the DC/DC converter 100A, the step-up operation is performed during the periods of the mode 1-1 and the mode 1.

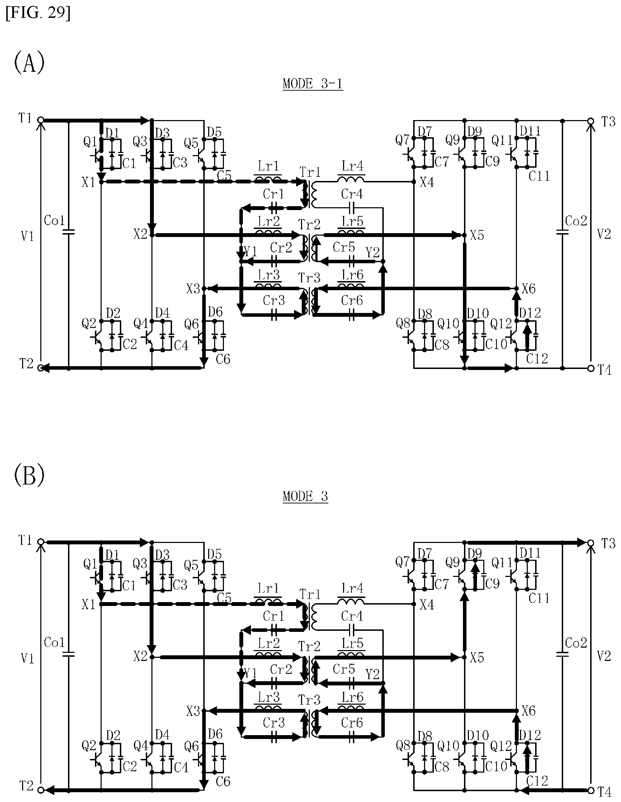

As illustrated in Fig. 29(A), during the period of the mode 3-1, when the switching element Q3 is turned on, the resonant current flows through the second resonant circuit and the third resonant circuit, and the load current flows through the secondary-side circuit via the transformer circuits Tr2 and Tr3. In the secondary-side circuit, the switching element Q10 is turned on, and thereby the secondary-side switching circuit 113 is short-circuited through the path between the switching element Q10 and the diode D12. Thus, in the second resonant circuit and the third resonant circuit, the resonant current larger than a normal resonant current flows, and large energy is accumulated in the resonant coils Lr2 and Lr3. As illustrated in Fig. 29(B), during the period of the mode 3, when the switching element Q10 is turned off, the energy accumulated during the period of the mode 3-1 is released, and the load current larger than a normal load current flows in the secondary-side circuit. As described above, in the DC/DC converter 100A, the step-up operation is performed during the periods of the mode 3-1 and the mode 3.

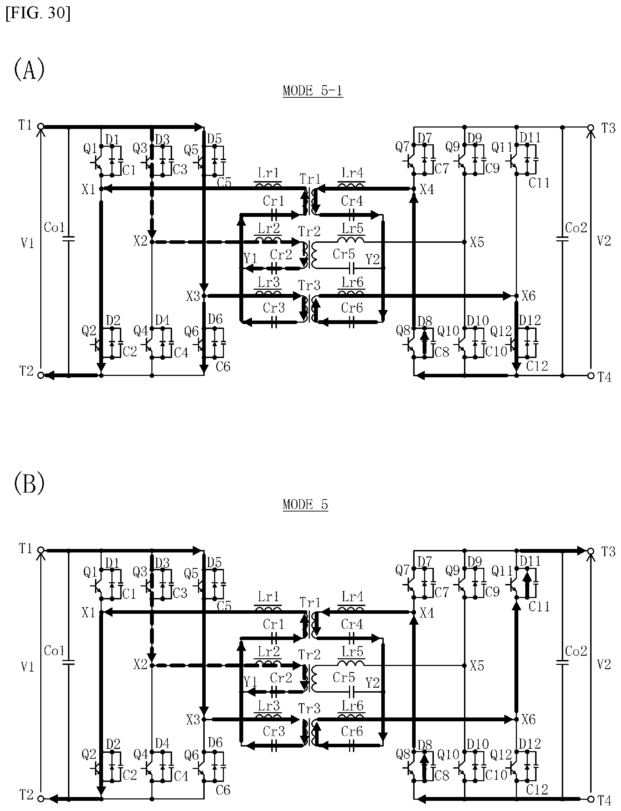

As illustrated in Fig. 30(A), during the period of the mode 5-1, when the switching element Q5 is turned on, the resonant current flows through the third resonant circuit and the first resonant circuit, and the load current flows through the secondary-side circuit via the transformer circuits Tr3 and Tr1. In the secondary-side circuit, when the switching element Q12 is turned on, the secondary-side switching circuit 113 is short-circuited through the path between the switching element Q12 and the diode D8. Thus, in the third resonant circuit and the first resonant circuit, the resonant current larger than a normal resonant current flows, and large energy is accumulated in the resonant coils Lr3 and Lr1. As illustrated in Fig. 30(B), during the period of the mode 5, when the switching element Q12 is turned off, the energy accumulated during the period of the mode 5-1 is released, and the load current larger than a normal load current flows in the secondary-side circuit. As described above, in the DC/DC converter 100A, the step-up operation is performed during the periods of the mode 5-1 and the mode 5.

In the present embodiment, the control unit 115A synchronizes the ON timing of the switching element Q8 with the ON timing of the switching element Q1 to generate the boost period ψ of the mode 1-1 at the timing when the resonance period starts. However, the timing determination at which the resonance period starts is not limited to this, and the control unit 115A may detect the load current (the current flowing through the fourth to sixth resonant circuits or the current flowing through the fourth to sixth legs) flowing through the secondary-side circuit (for example, the secondary-side coils of the transformer circuits Tr1 and Tr2) or the voltage of the upper arm or the lower arm of each secondary-side leg, and turn on the switching element Q8 in synchronization with the rise of the load current or the voltage. Further, within the resonance period, the switching element Q8 may be turned on after a lapse of a certain time in consideration of the phase delay of the secondary-side current from the turn-on of the switching element Q1, but when the mode 1-1 comes after the mode 1, the switching element Q8 is turned on after the load current increases and the load current is hard-switched, and in addition, the secondary-side switching circuit 113 is short-circuited during the reverse recovery period of the diode D7, so that noise may be generated. Therefore, as in the present embodiment, it is preferable to generate the boost period ψ at the timing when the resonance period starts. The same applies to the mode 3-1 and the mode 5-1.

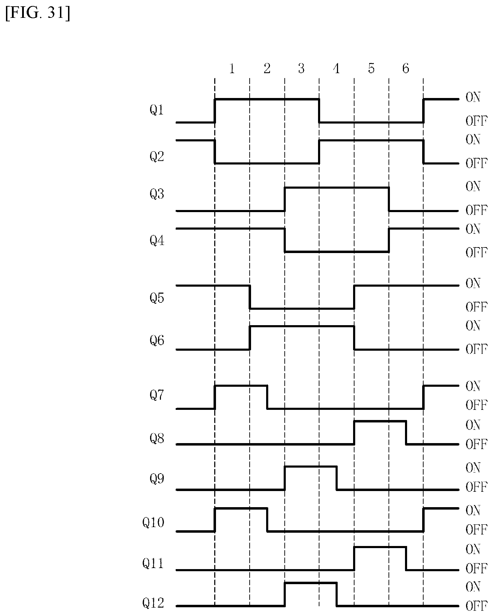

Fig. 31 illustrates a control timing of the DC/DC converter 100A when the driving frequency f is higher than the boost start driving frequency fψs. In Fig. 31, the control unit 115A performs the frequency modulation control on the switching elements Q1 to Q6, and performs the synchronous rectification control on the switching elements Q7 to Q12. The frequency modulation control is the same as the frequency modulation control of Fig. 23.

The control unit 115A During the synchronous rectification control turns on the switching elements Q7 and Q10 at the timing when the load current starts to flow to the secondary-side circuit according to the resonant current in the mode 1, turns on the switching elements Q9 and Q12 at the timing when the load current starts to flow to the secondary-side circuit according to the resonant current in the mode 3, and turns on the switching elements Q8 and Q11 at the timing when the load current starts to flow to the secondary-side circuit according to the resonant current in the mode 5. For example, the control unit 115A detects the timing at which the load current starts to flow by detecting the load current flowing through each leg of the secondary-side switching circuit 113. However, the present invention is not limited thereto, and the control unit 115A may detect the timing by detecting the resonant current flowing through each leg of the secondary-side switching circuit 113 or detecting the voltage across the current path of the switching elements Q7 to Q12.

The control unit 115A during the synchronous rectification control turns off the switching elements Q7 and Q10 at the timing when the load current in the mode 1 converges to 0, turns off the switching elements Q9 and Q12 at the timing when the load current in the mode 3 converges to 0, and turns off the switching elements Q8 and Q11 at the timing when the load current in the mode 5 converges to 0. Similarly to the detection of the timing at which the load current starts to flow, the control unit 115A detects the timing at which the load current converges to 0.

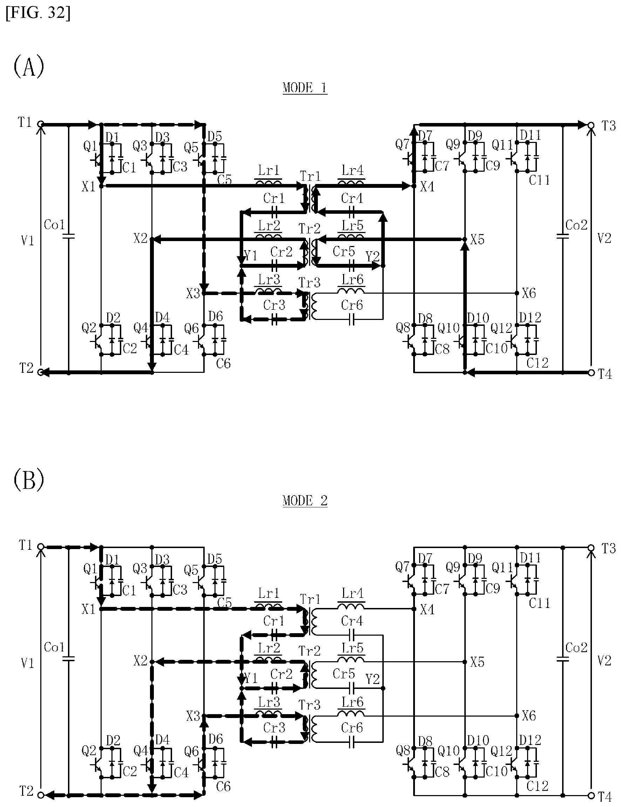

Figs. 32 to 34 illustrate main current path diagrams during the period of the modes 1 to 6 of Fig. 31.

As illustrated in Fig. 32(A), during the period of the mode 1, the switching elements Q1, Q7, and Q10 are turned on, the resonant current flows through the first resonant circuit and the second resonant circuit, and the load current flows through the secondary-side circuit via the transformer circuits Tr1 and Tr2. Since only the excitation current flows through the third resonant circuit, no load current flows through the secondary-side coil of the transformer circuit Tr3.

Fig. 32(B) illustrates a second half period of the mode 2. During the second half period of the mode 2, the switching elements Q7 and Q10 are turned off to end the synchronous rectification and only the excitation current flows in the primary-side circuit (the resonant current flowing in the period of the mode 1 converges), and thus the load current does not flow in the secondary-side circuit.

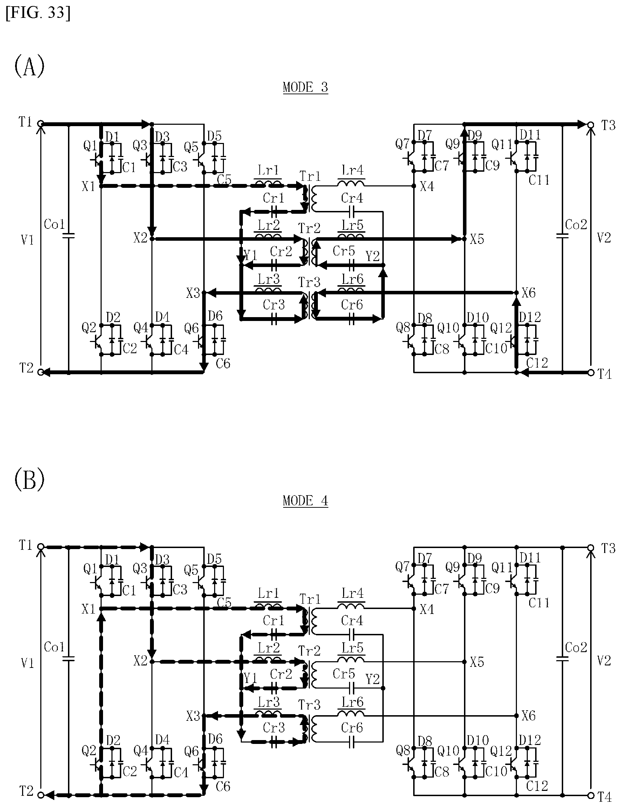

As illustrated in Fig. 33(A), during the period of the mode 3, the switching elements Q3, Q9, and Q12 are turned on, the resonant current flows through the second resonant circuit and the third resonant circuit, and the load current flows through the secondary-side circuit via the transformer circuits Tr2 and Tr3. Since only the excitation current flows through the first resonant circuit, no load current flows through the secondary-side coil of the transformer circuit Tr1.

Fig. 33(B) illustrates a second half period of the mode 4. During the second half period of the mode 4, the switching elements Q9 and Q12 are turned off to end the synchronous rectification and only the excitation current flows in the primary-side circuit (the resonant current flowing in the period of the mode 3 converges), and thus the load current does not flow in the secondary-side circuit.

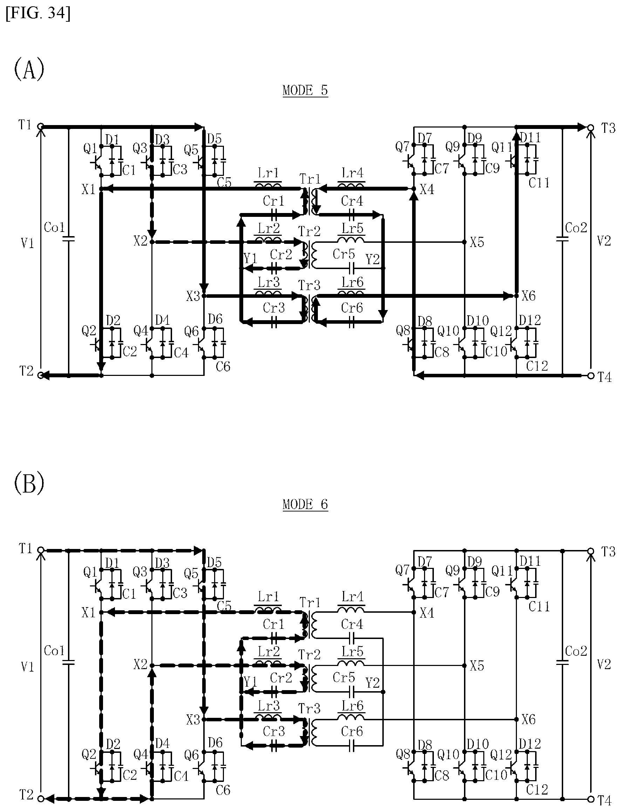

As illustrated in Fig. 34(A), during the period of the mode 5, the switching elements Q5, Q8, and Q11 are turned on, the resonant current flows through the third resonant circuit and the first resonant circuit, and the load current flows through the secondary-side circuit via the transformer circuits Tr3 and Tr1. Since only the excitation current flows through the second resonant circuit, no load current flows through the secondary-side coil of the transformer circuit Tr2.

Fig. 34(B) illustrates a second half period of the mode 6. During the second half period of the mode 6, the switching elements Q8 and Q11 are turned off to end the synchronous rectification and only the excitation current flows in the primary-side circuit (the resonant current flowing in the period of the mode 5 converges), and thus the load current does not flow in the secondary-side circuit.

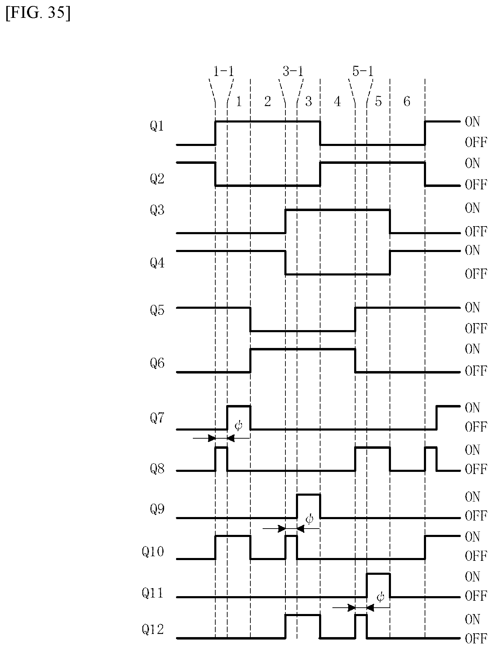

Fig. 35 illustrates a control timing of the DC/DC converter 100A when the driving frequency f is equal to or lower than the boost start driving frequency fψs. In Fig. 35, the control unit 115A performs the synchronous rectification control and frequency boost conversion control. A difference from Fig. 31 is that there is a boost period ψ of the mode 1-1, the mode 3-1, and the mode 5-1.

Durng the synchronous rectification control and the frequency boost conversion control, the control unit 115A turns on the switching element Q8 while keeping the switching element Q7 off at the timing when the resonance period in which the resonant current flows through the first resonant circuit and the second resonant circuit starts to generate the boost period ψ of the mode 1-1, turns on the switching element Q10 while keeping the switching element Q9 off at the timing when the resonance period in which the resonant current flows through the second resonant circuit and the third resonant circuit starts to generate the boost period ψ of the mode 3-1, and turns on the switching element Q12 while keeping the switching element Q11 off at the timing when the resonance period in which the resonant current flows through the third resonant circuit and the first resonant circuit starts to generate the boost period ψ of the mode 5-1.

During the synchronous rectification control and the frequency boost conversion control, the control unit 115A starts the synchronous rectification by turning off the switching element Q8 and turning on the switching element Q7 at the timing when the boost period ψ of the mode 1-1 ends, starts the synchronous rectification by turning off the switching element Q10 and turning on the switching element Q9 at the timing when the boost period ψ of the mode 3-1 ends, and starts the synchronous rectification by turning off the switching element Q12 and turning on the switching element Q11 at the timing when the boost period ψ of the mode 5-1 ends. Note that, during transition from the mode 1-1 to the mode 1, transition from the mode 3-1 to the mode 3, and transition from the mode 5-1 to the mode 5, a dead time may be provided to avoid a load short circuit due to overlapping of off-on periods.

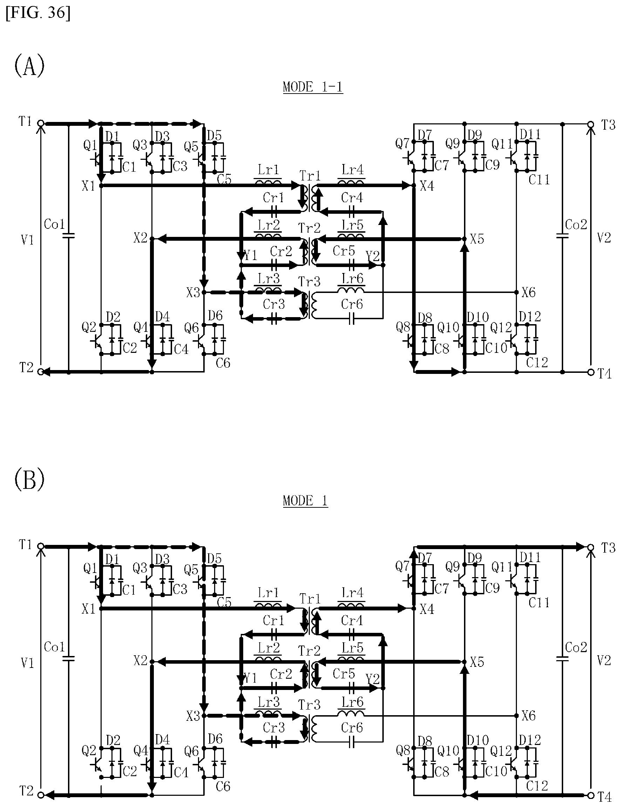

Figs. 36 to 38 illustrate current path diagrams during the periods of the modes 1-1, 1, 3-1, 3, 5-1, and 5 in Fig. 35. The current paths during the periods of the mode 2, the mode 4, and the mode 6 in Fig. 35 are the same as the current paths during the periods of the mode 2, the mode 4, and the mode 6 in Fig. 31, and thus are omitted.

As illustrated in Fig. 36(A), during the period of the mode 1-1, when the switching element Q1 is turned on, the resonant current flows through the first resonant circuit and the second resonant circuit, and the load current flows through the secondary-side circuit via the transformer circuits Tr1 and Tr2. In the secondary-side circuit, when the switching elements Q8 and Q10 are turned on, the secondary-side switching circuit 113 is short-circuited through the path between the switching element Q8 and the switching element Q10 (or the diode D10). Thus, in the first resonant circuit and the second resonant circuit, the resonant current larger than a normal resonant current flows, and large energy is accumulated in the resonant coils Lr1 and Lr2. As illustrated in Fig. 36(B), during the period of the mode 1, when the switching element Q8 is turned off and the switching element Q7 is turned on, the energy accumulated during the period of the mode 1-1 is released, and the load current larger than a normal load current flows in the secondary-side circuit. As described above, in the DC/DC converter 100A, the step-up operation is performed in the periods of the mode 1-1 and the mode 1.

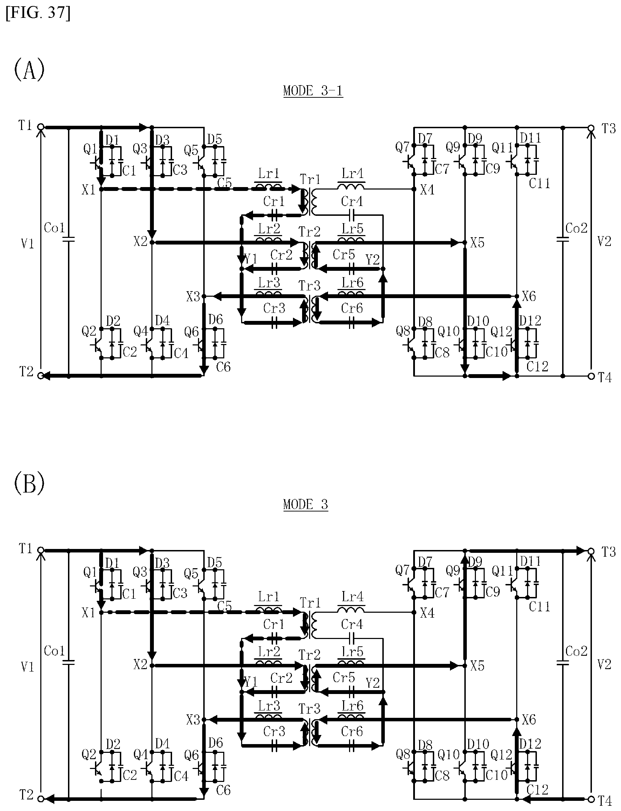

As illustrated in Fig. 37(A), during the period of the mode 3-1, when the switching element Q3 is turned on, the resonant current flows through the second resonant circuit and the third resonant circuit, and the load current flows through the secondary-side circuit via the transformer circuits Tr2 and Tr3. In the secondary-side circuit, the switching elements Q10 and Q12 are turned on, and thus the secondary-side switching circuit 113 is short-circuited through the path between the switching element Q10 and the switching element Q12 (or the diode D12). Thus, in the second resonant circuit and the third resonant circuit, the resonant current larger than a normal resonant current flows, and large energy is accumulated in the resonant coils Lr2 and Lr3. As illustrated in Fig. 37(B), during the period of the mode 3, when the switching element Q10 is turned off and the switching element Q9 is turned on, the energy accumulated during the period of the mode 3-1 is released, and the load current larger than a normal load current flows in the secondary-side circuit. As described above, in the DC/DC converter 100A, the step-up operation is performed in the periods of the mode 3-1 and the mode 3.

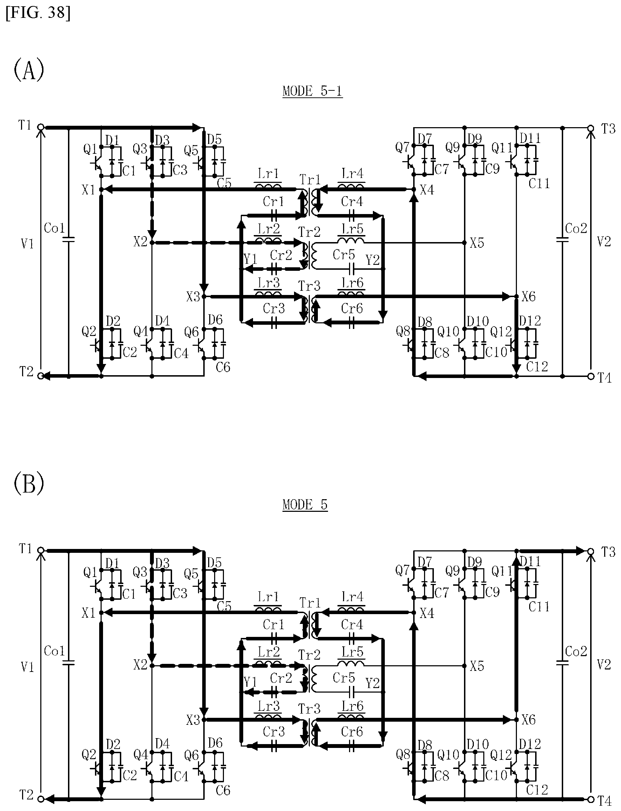

As illustrated in Fig. 38(A), during the period of the mode 5-1, when the switching element Q5 is turned on, the resonant current flows through the third resonant circuit and the first resonant circuit, and the load current flows through the secondary-side circuit via the transformer circuits Tr3 and Tr1. In the secondary-side circuit, when the switching elements Q12 and Q8 are turned on, the secondary-side switching circuit 113 is short-circuited through the path between the switching element Q12 and the switching element Q8 (or the diode D8). Thus, in the third resonant circuit and the first resonant circuit, the resonant current larger than a normal resonant current flows, and large energy is accumulated in the resonant coils Lr3 and Lr1. As illustrated in Fig. 38(B), during the period of the mode 5, when the switching element Q12 is turned off and the switching element Q11 is turned on, the energy accumulated during the period of the mode 5-1 is released, and the load current larger than a normal load current flows in the secondary-side circuit. As described above, in the DC/DC converter 100A, the step-up operation is performed during the periods of the mode 5-1 and the mode 5.

In the present embodiment, the control unit 115A starts synchronous rectification at the timing when the boost period ψ of the mode 1-1 ends by synchronizing the ON timing of the switching element Q7 with the OFF timing of the switching element Q8. However, the present invention is not limited thereto, and the timing of starting synchronous rectification can be appropriately changed as long as the boost period ψ is generated within the resonance period. However, when the mode 1-1 comes after the mode 1, the switching element Q8 is turned on after the load current increases, and the load current is hard-switched, so that noise may be generated. Therefore, as in the present embodiment, it is preferable to start the synchronous rectification at the timing when the boost period ψ ends. The same applies to the mode 3-1 and the mode 3, and mode 5-1 and mode 5.

### [First modification of three-phase current resonant DC/DC converter]

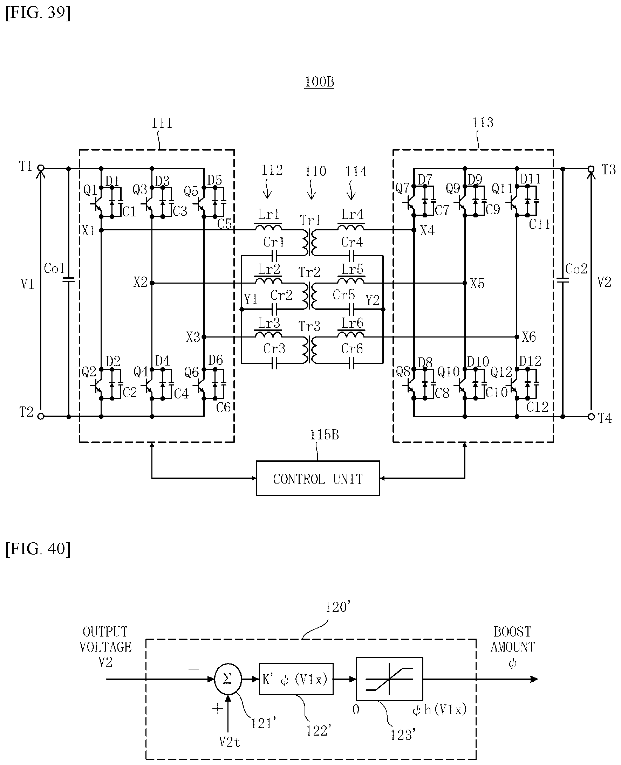

Fig. 39 illustrates a three-phase current resonant DC/DC converter 100B (hereinafter, the DC/DC converter 100B) according to a first modification of the second embodiment of the present invention. The DC/DC converter 100B has the same configuration as that of the second embodiment except for the control unit 115B.

The control unit 115B is the same as that of the second embodiment except that an output voltage boost conversion control block 120' illustrated in Fig. 40 is provided instead of the frequency boost conversion control block 120 of the second embodiment and that output voltage boost conversion control is performed instead of the frequency boost conversion control.

As illustrated in Fig. 40, the output voltage boost conversion control block 120' includes a second addition unit 121', a second multiplication unit 122', and a second clamp unit 123'.

The second addition unit 121' compares the output voltage V2 with a target voltage V2t [V], and outputs a difference (V2t - V2) between the output voltage V2 and the target voltage V2t to the second multiplication unit 122' when the input voltage V1 is lower than the predetermined threshold (V1th) and the driving frequency f is equal to or lower than the boost start driving frequency fψs.

The second multiplication unit 122' calculates the boost amount ψ by multiplying the difference (V2t-V2) by an output voltage boost conversion gain K'ψ(V1x), and outputs the boost amount ψ to the second clamp unit 123'. Similarly to the frequency boost conversion gain Kψ(V1x) of the second embodiment, the output voltage boost conversion gain K'ψ(V1x) is a value determined by the input voltage V1 (for example, V1 = V11 or V12) at that time.

The second clamp unit 123' sets the lower limit of the boost amount ψ to 0° and the upper limit to the maximum boost amount ψh(V1x), and outputs the boost amount ψ (ψ = (V2t-V2) × K'ψ(V1x) ≤ ψh(V1x)). As in the second embodiment, the maximum boost amount ψh(V1x) is a value determined by the input voltage V1 (for example, ψh(V1x) = ψh(V11) or ψh(V12)) at that time.

The control unit 115B performs the output voltage boost conversion control on the basis of the boost amount ψ output from the second clamp unit 123'. Note that, in the present modification, the output voltage boost conversion gain K'ψ(V1x) and the maximum boost amount ψh(V1x) are varied according to the input voltage V1, but the boost start driving frequency fψs may be further varied according to the input voltage V1.

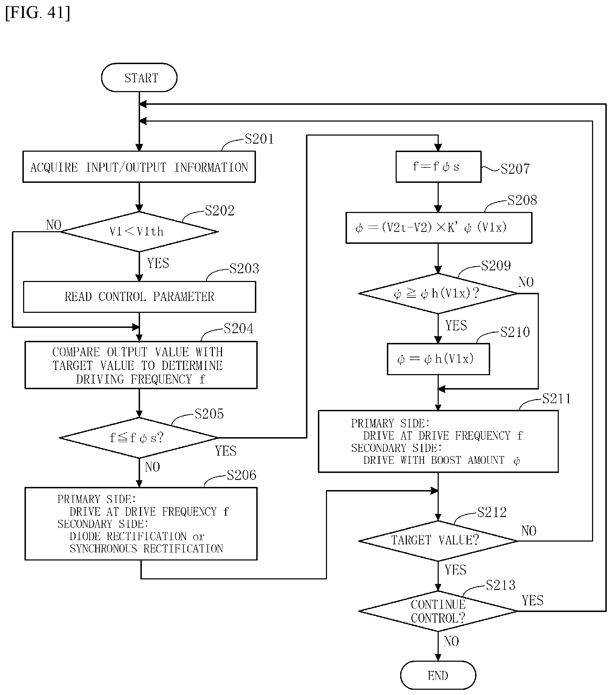

Fig. 41 illustrates an example of a flowchart of control processing executed by the control unit 115B at the time of the forward power transmission. The difference from Fig. 22 is steps S203, S207, and S208. Steps S201 and S202 are the same as steps S101 and S102, steps S204 to S206 are the same as steps S104 to S106, and steps S209 to S213 are the same as steps S108 to S112. Hereinafter, only steps S203, S207, and S208 will be described.

In step S203, the control unit 115B reads the control parameters stored in the storage unit. The control parameters include the boost start driving frequency fψs, an output voltage boost conversion gain K'ψ(V1x), the maximum boost amount ψh(V1x), and the like, which are control parameters of the output voltage boost conversion control. Note that fixed parameters among the control parameters may be read only once during activation.

In step S207, the control unit 115B sets the driving frequency f to the boost start driving frequency fψs. That is, the output voltage boost conversion control is different from the frequency boost conversion control in that the driving frequency f is fixed to the boost start driving frequency fψs.

In step S208, the control unit 115B calculates the boost amount ψ by multiplying the difference (V2t - V2) between the output voltage V2 and the target voltage V2t by the output voltage boost conversion gain K'ψ(V1x). That is, in Fig. 22, the boost amount ψ is determined by changing the driving frequency f, and the frequency boost conversion control is performed to perform the boost control on the output voltage V2, but in Fig. 41, there are differences in that the driving frequency f is set to the boost start driving frequency fψs, the boost amount ψ is determined by the output voltage V2 itself, and the boost control is performed.

With the DC/DC converter 100B of the first modification, effects similar to those of the second embodiment can be obtained except for the effect of calculating the boost amount ψ on the basis of the driving frequency f of the second embodiment. That is, in the DC/DC converter 100B, by performing the boost control (output voltage boost conversion control) when the driving frequency f is equal to or lower than the boost start driving frequency fψs, a large resonant current is caused to flow through the resonant circuit in the boost period ψ to store large energy in the resonant coils Lr1 to Lr3 in a short period, and the energy can be released as the load current, so that a high output voltage V2 can be obtained even when the input voltage V1 is low. As a result, with the DC/DC converter 100B, it is possible to cope with a wide range of the output voltage V2 without adding an element and a circuit. A similar effect can be obtained during the backward power transmission.

### [Second modification of three-phase current resonant DC/DC converter]

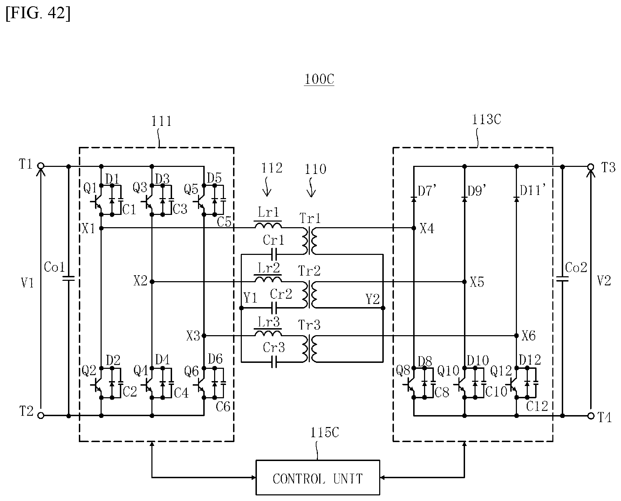

Fig. 42 illustrates a three-phase current resonant DC/DC converter 100C (hereinafter, the DC/DC converter 100C) according to a second modification of the second embodiment of the present invention. A DC/DC converter 100C has the same configuration as that of the second embodiment except that it includes a secondary-side switching circuit 113C and a control unit 115C and that it does not include the secondary-side resonant circuit 114.

The DC/DC converter 100C is an LLC three-phase current resonant DC/DC converter, performs the forward power transmission from the primary-side circuit to the secondary-side circuit, and does not perform the backward power transmission from the secondary-side circuit to the primary-side circuit. The DC/DC converter 100C need not include the capacitor Co1.

The secondary-side switching circuit 113C is the same as the secondary-side switching circuit 113 of the second embodiment except that the upper arm of the fourth leg is constituted by only the diode D7', the upper arm of the fifth leg is constituted by only the diode D9', and the upper arm of the sixth leg is constituted by only the diode D11'.

The control unit 115C has the same configuration as the control unit 115A of the second embodiment except that control at the time of the backward power transmission is not performed and the switching elements Q7, Q9, and Q11 are not controlled.

In the DC/DC converter 100C, by performing the boost control (frequency boost conversion control) when the driving frequency f is equal to or lower than the boost start driving frequency fψs, a large resonant current is caused to flow through the resonant circuit in the boost period ψ to store large energy in the resonant coils Lr1 to Lr3 in a short period, and the energy can be released as the load current, so that a high output voltage V2 can be obtained even when the input voltage V1 is low. As a result, with the DC/DC converter 100C, it is possible to cope with a wide range of the output voltage V2 without adding an element and a circuit.

Note that, in the case of the second modification, similarly to the case where the secondary-side switching circuit 113 is diode-rectified in the second embodiment, the switching element Q8 may be turned on after a certain time elapses from the turn-on of the switching element Q1, but when the mode 1-1 comes after the mode 1, the switching element Q8 is turned on after the load current increases, and the secondary-side switching circuit 113 is short-circuited during the reverse recovery period of the diode D7, so that noise may be generated. Therefore, similarly to the second embodiment, it is preferable to generate the boost period ψ at the timing when the resonance period starts. The same applies to the mode 3-1 and the mode 5-1.

Furthermore, the control unit 115C can have the same configuration as the control unit 115B of the first modification of the second embodiment.

### [Another modification of three-phase current resonant DC/DC converter]

Although the embodiments of the three-phase current resonant DC/DC converter according to the present invention and the modifications thereof have been described above, the present invention is not limited to the embodiments and the modifications thereof.

The three-phase current resonant DC/DC converter according to the present invention can be modified appropriately as long as it includes a transformer unit including a first transformer circuit, a second transformer circuit, and a third transformer circuit, each of the transformer circuits including a primary-side coil and a secondary-side coil, a primary-side switching circuit including a first leg, a second leg, and a third leg connected in parallel, each of the legs including an upper arm and a lower arm connected in series, and each of the arms including a switching element, a reverse connected diode, and a partial resonant capacitor connected in parallel, a primary-side resonant circuit including a first resonant circuit connected to the first leg and the primary-side coil of the first transformer circuit, a second resonant circuit connected to the second leg and the primary-side coil of the second transformer circuit, and a third resonant circuit connected to the third leg and the primary-side coil of the third transformer circuit, each of the resonant circuits including a resonant coil and a resonant capacitor, a secondary-side switching circuit including a fourth leg, a fifth leg, and a sixth leg connected in parallel, each leg including a switching element, a reverse connected diode, and a partial resonant capacitor connected in parallel, and a control unit that controls the primary-side switching circuit and the secondary-side switching circuit, the three-phase current resonant DC/DC converter performing forward power transmission from the primary-side switching circuit to the secondary-side switching circuit, in which the control unit performs, when a driving frequency of the primary-side switching circuit is higher than a first frequency, frequency modulation control of controlling the driving frequency according to an output of the secondary-side switching circuit, and performs, when the driving frequency is equal to or lower than the first frequency, boost control to generate a boost period in which the secondary-side switching circuit is brought into a short-circuit state, and the control unit at a time of the boost control turns on one of the switching elements of the secondary-side switching circuit to generate the boost period within a period in which a resonant current flows through the first resonant circuit and the second resonant circuit, within a period in which a resonant current flows through the second resonant circuit and the third resonant circuit, and within a period in which a resonant current flows through the third resonant circuit and the first resonant circuit.

For example, in the second embodiment and the first modification of the second embodiment, since it is a secondary-side switching circuit in which the secondary side of the first transformer circuit is connected to the fourth leg, the secondary side of the second transformer circuit is connected to the fifth leg, and the secondary side of the third transformer circuit is connected to the sixth leg, the control unit at the time of boost control can be configured to turn on the switching element of the lower arm of the fourth leg or the upper arm of the fifth leg during a period in which a resonant current flows in the first resonant circuit and the second resonant circuit to generate a boost period, turn on the switching element of the lower arm of the fifth leg or the upper arm of the sixth leg during a period in which a resonant current flows in the second resonant circuit and the third resonant circuit to generate a boost period, and turn on the switching element of the lower arm of the sixth leg or the upper arm of the fourth leg during a period in which a resonant current flows in the third resonant circuit and the first resonant circuit to generate a boost period.

Further, similarly, in the second modification of the second embodiment, the upper arm of each of the fourth leg, the fifth leg, and the sixth leg is a diode, and the lower arm of each of the fourth leg, the fifth leg, and the sixth leg is a switching element, but the diode and the switching element of each leg can be appropriately replaced. For example, one of the lower arm of the fourth leg and the upper arm of the fifth leg may include a switching element, a reverse connected diode, and a partial resonant capacitor connected in parallel, and the other may include only a diode, or alternatively, one of the lower arm of the fifth leg and the upper arm of the sixth leg may include a switching element, a reverse connected diode, and a partial resonant capacitor connected in parallel, and the other may include only a diode, or alternatively, one of the lower arm of the sixth leg and the upper arm of the fourth leg may include a switching element, a reverse connected diode, and a partial resonant capacitor connected in parallel, and the other may include only a diode. In this case, the control unit at the time of boost control can be configured to turn on the switching element of the lower arm of the fourth leg or the upper arm of the fifth leg during a period in which a resonant current flows in the first resonant circuit and the second resonant circuit to generate a boost period, turn on the switching element of the lower arm of the fifth leg or the upper arm of the sixth leg during a period in which a resonant current flows in the second resonant circuit and the third resonant circuit to generate a boost period, and turn on the switching element of the lower arm of the sixth leg or the upper arm of the fourth leg during a period in which a resonant current flows in the third resonant circuit and the first resonant circuit to generate a boost period.

For example, in the second embodiment and the second modification of the second embodiment, the boost amount ψ is calculated on the basis of the driving frequency f, and in the first modification of the second embodiment, the boost amount ψ is calculated on the basis of the output voltage V2, but the boost amount ψ may be calculated on the basis of an output (output current, output power, or the like) other than the output voltage V2. That is, the control unit during the boost control can be configured to calculate a boost amount by multiplying a difference between an output value of the secondary-side circuit and a predetermined target value by the output boost conversion gain, and determine a length of a boost period on the basis of the boost amount.

### DESCRIPTION OF REFERENCE SIGNS

- 1, 1A to 1C: Single-phase current resonant DC/DC converter
- 10, 10A to 10C: Main circuit unit
- 11: Primary-side switching circuit
- 12: Primary-side resonant circuit
- 13, 13A to 13C: Secondary-side rectifier circuit
- 14: Secondary-side resonant circuit
- 20, 20A to 20C: Control unit
- 30: Frequency phase shift conversion control block
- 31: First calculation unit
- 32: First multiplication unit
- 33: First clamp unit
- 40: Frequency boost conversion control block
- 41: Second calculation unit
- 42: Second multiplication unit
- 43: Second clamp unit
- 100A to 100C: Three-phase current resonant DC/DC converter
- 110: Transformer unit
- 111: Primary-side switching circuit
- 112: Primary-side resonant circuit
- 113, 113C: Secondary-side switching circuit
- 114: Secondary-side resonant circuit
- 115A to 115C: Control unit
- 120: Output voltage boost conversion control block
- 120': Frequency boost conversion control block
- 121: First addition unit
- 121': Second addition unit
- 122: First multiplication unit
- 122': Second multiplication unit
- 123: First clamp unit
- 123': Second clamp unit

## Claims

1. A single-phase current resonant DC/DC converter comprising:
a main circuit unit including
a transformer circuit,
a primary-side switching circuit provided on a primary side of the transformer circuit, including at least one primary-side leg which includes a set of primary-side switching elements connected in series,
a primary-side resonant circuit provided between the primary-side leg and the transformer circuit, including a resonant coil and a resonant capacitor, and
a secondary-side rectifier circuit provided on a secondary side of the transformer circuit, including at least one secondary-side leg which includes a set of rectifying means connected in series, which the rectifying means including a diode or a secondary-side switching element; and
a control unit that controls the primary-side switching element and/or the secondary-side switching element, wherein
the control unit executes:
frequency modulation control of controlling an output of the main circuit unit with the driving frequency as a control amount when the driving frequency of the primary-side switching element is between a first frequency and a second frequency lower than the first frequency, and
at least one of the following controls:
output suppression conversion control of reducing the output by using a first control amount calculated using a difference between the driving frequency and the first frequency as the control amount when the driving frequency is higher than the first frequency; or
output increase conversion control of increasing the output by using a second control amount calculated using a difference between the second frequency and the driving frequency as the control amount when the driving frequency is lower than the second frequency.

2. The single-phase current resonant DC/DC converter according to claim 1, wherein
the output suppression conversion control includes
frequency PWM conversion control of controlling a pulse width of a PWM signal for the primary-side switching element or the secondary-side switching element on the basis of the first control amount, or
frequency intermittent conversion control of controlling a standby period in which an on/off operation of the primary-side switching element is not performed on the basis of the first control amount, or
frequency phase shift conversion control of controlling a phase shift amount between the primary-side legs on the basis of the first control amount.

3. The single-phase current resonant DC/DC converter according to claim 1, wherein
the output increase conversion control is frequency boost conversion control of short-circuiting the secondary-side rectifier circuit by controlling an ON period of the secondary-side switching element of the secondary-side rectifier circuit during a period in which a resonant current flows in the primary-side resonant circuit on the basis of the second control amount.

4. The single-phase current resonant DC/DC converter according to claim 1,
wherein
the first control amount is calculated by calculating the difference between the driving frequency and the first frequency and a predetermined first gain, and
the control unit, during the output suppression conversion control, varies a value of the first frequency and/or the first gain according to an input/output condition related to an input voltage, an input/output voltage ratio, or output power of the main circuit unit.

5. The single-phase current resonant DC/DC converter according to claim 1, wherein
the second control amount is calculated by calculating the difference between the second frequency and the driving frequency and a predetermined second gain, and
the control unit, during the output increase conversion control, varies a value of the second frequency and/or the second gain according to an input/output condition related to an input voltage, an input/output voltage ratio, or output power of the main circuit unit.

6. The single-phase current resonant DC/DC converter according to claim 1, wherein
the control unit, during the output suppression conversion control, performs control so that the first control amount does not exceed a predetermined first maximum control amount, and
the control unit, during the output increase conversion control, performs control so that the second control amount does not exceed a predetermined second maximum control amount.

7. The single-phase current resonant DC/DC converter according to claim 1, wherein
the main circuit unit includes a resonant coil and a resonant capacitor, and
the primary-side switching circuit includes two of the primary-side legs consisting of a first leg and a second leg connected in parallel, and
the secondary-side rectifier circuit includes two of the secondary-side legs consisting of a third leg and a fourth leg connected in parallel, which the rectifying means of each of the legs includes the secondary-side switching element, or only the rectifying means constituting upper and lower arms of the third leg or the fourth leg includes the secondary-side switching element, or only the rectifying means constituting a lower arm of the third leg and an upper arm or a lower arm of the fourth leg includes the secondary-side switching element, and a reverse connected diode is connected in parallel to a current path of the secondary-side switching element.

8. The single-phase current resonant DC/DC converter according to claim 7, wherein
the control unit performs frequency phase shift conversion control as the output suppression conversion control, and
the control unit, during the frequency phase shift conversion control, determines the driving frequency by comparing an output value of the output with a target value, and sets a value obtained by multiplying the difference between the driving frequency and the first frequency by a predetermined first gain as a phase shift amount to provide a phase difference corresponding to the phase shift amount between the first leg and the second leg.

9. The single-phase current resonant DC/DC converter according to claim 7, wherein
the control unit performs frequency boost conversion control as the output increase conversion control, and
the control unit, during the frequency boost conversion control, determines the driving frequency by comparing an output value of the output with a target value, and sets a value obtained by multiplying the difference between the second frequency and the driving frequency by a predetermined second gain as a boost amount to provide the secondary-side switching element with an on-period corresponding to the boost amount.

10. The single-phase current resonant DC/DC converter according to claim 1, wherein
the main circuit unit includes a resonant coil and a resonant capacitor, and
the primary-side switching circuit includes two of the primary-side legs consisting of a first leg and a second leg connected in parallel, and
the secondary-side rectifier circuit includes two of the secondary-side legs consisting of a third leg and a fourth leg connected in parallel, and the rectifying means of each of the legs includes the secondary-side switching element, and
the control unit performs frequency PWM conversion control as the output suppression conversion control, and
the control unit, during the frequency PWM conversion control, determines the driving frequency by comparing an output value of the output with a target value, calculates a phase difference that is the first control amount using the difference between the driving frequency and the first frequency, and shifts an on-timing of the secondary-side switching element by the phase difference relative to an on-timing of the primary-side switching element.

11. A three-phase current resonant DC/DC converter comprising:
a transformer unit including a first transformer circuit, a second transformer circuit, and a third transformer circuit, each of the transformer circuits including a primary-side coil and a secondary-side coil;
a primary-side switching circuit including a first leg, a second leg, and a third leg connected in parallel, each of the legs includes an upper arm and a lower arm connected in series, and each of the arms includes a switching element, a reverse connected diode, and a partial resonant capacitor connected in parallel;
a primary-side resonant circuit includes a first resonant circuit connected to the first leg and the primary-side coil of the first transformer circuit, a second resonant circuit connected to the second leg and the primary-side coil of the second transformer circuit, and a third resonant circuit connected to the third leg and the primary-side coil of the third transformer circuit, each of the resonant circuits including a resonant coil and a resonant capacitor;
a secondary-side switching circuit including a fourth leg, a fifth leg, and a sixth leg connected in parallel, each of the legs includes a switching element, a reverse connected diode, and a partial resonant capacitor connected in parallel; and
a control unit that controls the primary-side switching circuit and the secondary-side switching circuit; and
the three-phase current resonant DC/DC converter performing forward power transmission from the primary-side switching circuit to the secondary-side switching circuit, wherein
the control unit
performs, when a driving frequency of the primary-side switching circuit is higher than a first frequency, frequency modulation control of controlling the driving frequency according to an output of the secondary-side switching circuit, and
performs, when the driving frequency is equal to or lower than the first frequency, boost control to generate a boost period in which the secondary-side switching circuit is brought into a short-circuit state, and
the control unit, during the boost control,
turns on one of the switching elements of the secondary-side switching circuit to generate the boost period within a period in which a resonant current flows through the first resonant circuit and the second resonant circuit, within a period in which a resonant current flows through the second resonant circuit and the third resonant circuit, and within a period in which a resonant current flows through the third resonant circuit and the first resonant circuit.

12. The three-phase current resonant DC/DC converter according to claim 11, wherein
the transformer unit has:
the secondary-side coil of the first transformer circuit connected to the fourth leg,
the secondary-side coil of the second transformer circuit connected to the fifth leg, and
the secondary-side coil of the third transformer circuit connected to the sixth leg, and
the secondary-side switching circuit
includes the fourth leg, the fifth leg, and the sixth leg, each of the legs includes an upper arm and a lower arm connected in series, and each of the arms includes the switching element, the reverse connected diode, and the partial resonant capacitor connected in parallel, and
the control unit during the boost control
turns on the switching element of the lower arm of the fourth leg or the switching element of the upper arm of the fifth leg to generate the boost period within the period in which the resonant current flows through the first resonant circuit and the second resonant circuit,
turns on the switching element of the lower arm of the fifth leg or the switching element of the upper arm of the sixth leg to generate the boost period within the period in which the resonant current flows through the second resonant circuit and the third resonant circuit, and
turns on the switching element of the lower arm of the sixth leg or the switching element of the upper arm of the fourth leg to generate the boost period within the period in which the resonant current flows through the third resonant circuit and the first resonant circuit.

13. The three-phase current resonant DC/DC converter according to claim 11, wherein
the control unit, during the boost control,
calculates a boost amount by multiplying a difference between the driving frequency and the first frequency by a frequency boost conversion gain, and determines a length of the boost period on the basis of the boost amount.

14. The three-phase current resonant DC/DC converter according to claim 11, wherein
the control unit, during the boost control,
calculates a boost amount by multiplying a difference between an output value of the secondary-side switching circuit and a predetermined target value by an output boost conversion gain, and determines a length of the boost period on the basis of the boost amount.

15. The three-phase current resonant DC/DC converter according to claim 11, wherein
the control unit, during the boost control,
starts the boost period at a timing when the period in which the resonant current flows starts.

16. The three-phase current resonant DC/DC converter according to claim 11, wherein
the secondary-side switching circuit
includes the fourth leg, the fifth leg, and the sixth leg, each of the legs includes an upper arm and a lower arm connected in series, and each of the arms includes the switching element, the reverse connected diode, and the partial resonant capacitor connected in parallel, and
the control unit
performs synchronous rectification control of turning on any one of the switching elements of each of the arms of the secondary-side switching circuit to generate a synchronous rectification period, and
the control unit, during the boost control and the synchronous rectification control,
starts the boost period at a timing when the period in which the resonant current flows starts, and starts the synchronous rectification period at a timing when the boost period ends.

17. The three-phase current resonant DC/DC converter according to claim 11, wherein
the control unit
varies a maximum value of the boost period by a input/output voltage ratio so that the boost period becomes longer when the input/output voltage ratio between the input voltage of the primary-side switching circuit and the output voltage of the secondary-side switching circuit is high.

18. The three-phase current resonant DC/DC converter according to claim 11, wherein
the secondary-side switching circuit
includes the fourth leg, the fifth leg, and the sixth leg, and each of the legs includes an upper arm and a lower arm connected in series,
one of the lower arm of the fourth leg or the upper arm of the fifth leg is constituted by the switching element, the reverse connected diode, and the partial resonant capacitor connected in parallel, and another of the lower arm of the fourth leg or the upper arm of the fifth leg is constituted only by a diode,
one of the lower arm of the fifth leg or the upper arm of the sixth leg is constituted by the switching element, the reverse connected diode, and the partial resonant capacitor connected in parallel, and another of the lower arm of the fifth leg or the upper arm of the sixth leg is constituted only by a diode, and
one of the lower arm of the sixth leg or the upper arm of the fourth leg is constituted by the switching element, the reverse connected diode, and the partial resonant capacitor connected in parallel, and another of the lower arm of the sixth leg or the upper arm of the fourth leg is constituted only by a diode, and
the control unit during the boost control
turns on the switching element of the lower arm of the fourth leg or the switching element of the upper arm of the fifth leg to generate the boost period within the period in which the resonant current flows through the first resonant circuit and the second resonant circuit,
turns on the switching element of the lower arm of the fifth leg or the switching element of the upper arm of the sixth leg to generate the boost period within the period in which the resonant current flows through the second resonant circuit and the third resonant circuit, and
turns on the switching element of the lower arm of the sixth leg or the switching element of the upper arm of the fourth leg to generate the boost period within the period in which the resonant current flows through the third resonant circuit and the first resonant circuit.

19. The three-phase current resonant DC/DC converter according to claim 11, further comprising:
a secondary-side resonant circuit includes a fourth resonant circuit connected to the fourth leg and the secondary-side coil of the first transformer circuit, a fifth resonant circuit connected to the fifth leg and the secondary-side coil of the second transformer circuit, and a sixth resonant circuit connected to the sixth leg and the secondary-side coil of the third transformer circuit, each of the resonant circuits includes a resonant coil and a resonant capacitor, wherein
the secondary-side switching circuit
includes the fourth leg, the fifth leg, and the sixth leg, each of the legs includes an upper arm and a lower armconnected in series, and each of the arms includes the switching element, the reverse connected diode, and the partial resonant capacitor connected in parallel, and
the control unit, when performing a backward power transmission from the secondary-side switching circuit to the primary-side switching circuit,
performs frequency modulation control of controlling the driving frequency according to an output of the primary-side switching circuit when a driving frequency of the secondary-side switching circuit is higher than a second frequency, and
performs boost control to generate a boost period in which the primary-side switching circuit is brought into a short-circuit state when the driving frequency is equal to or lower than the second frequency, and
the control unit during the boost control
turns on one of the switching elements of the primary-side switching circuit to generate the boost period within the period in which the resonant current flows through the fourth resonant circuit and the fifth resonant circuit, within the period in which the resonant current flows through the fifth resonant circuit and the sixth resonant circuit, and within the period in which the resonant current flows through the sixth resonant circuit and the fourth resonant circuit.
